(19) Europäisches Patentamt / European Patent Office / Office européen des brevets

(11) **EP 4 691 623 A1**

(12) **EUROPEAN PATENT APPLICATION**

(43) Date of publication:
**11.02.2026 Bulletin 2026/07**

(21) Application number: **25191121.0**

(22) Date of filing: **22.07.2025**

(51) International Patent Classification (IPC):
***B01J 20/06*** (2006.01) ***B01D 53/02*** (2006.01)
***B01J 20/10*** (2006.01) ***B01J 20/20*** (2006.01)
***B01J 20/22*** (2006.01) ***B01J 20/32*** (2006.01)

(52) Cooperative Patent Classification (CPC):
**B01J 20/06; B01D 53/02; B01J 20/103; B01J 20/20; B01J 20/22; B01J 20/3204; B01J 20/3217; B01J 20/3219; B01J 20/3225; B01J 20/3248**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.08.2024 US 202463680662 P**
**26.06.2025 US 202519251533**

(71) Applicant: **GE Vernova Technology GmbH**
**5400 Baden (CH)**

(72) Inventors:
- **CHAABAN, Maya**
  **Greenville 29615 (US)**
- **LIU, Jie Jerry**
  **Greenville 29615 (US)**
- **ANTONIO, Alexandra**
  **Greenville 29615 (US)**
- **GOSWAMI, Subhadip**
  **Greenville 29615 (US)**
- **MOORE, David Roger**
  **Greenville 29615 (US)**
- **SHI, Xiaolei**
  **Greenville 29615 (US)**

(74) Representative: **Openshaw & Co.**
**8 Castle Street**
**Farnham, Surrey GU9 7HR (GB)**

(54) **METHOD OF MAKING OR REJUVENATING AN ABSORPTIVE ARTICLE FOR CAPTURING CARBON DIOXIDE**

(57) Described herein are methods of making or rejuvenating solid sorbent composites including amines and a porous support. The solid sorbent composites exhibit high adsorption capacities for carbon dioxide. The solid sorbent composites exhibit desirable hydrothermal and cycling stability.

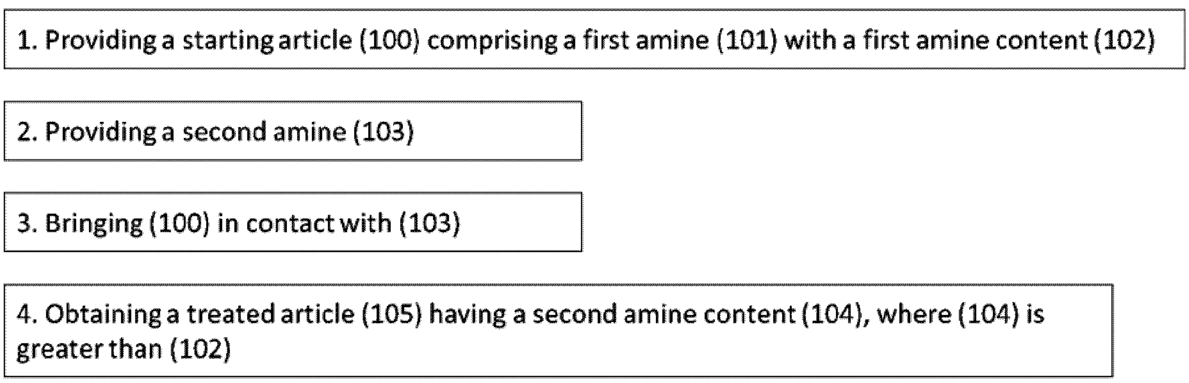


FIG. 1

EP 4 691 623 A1

## Description

RELATED APPLICATIONS

This application claims priority to U.S. Provisional Application Serial No. 63/680,662, filed on August 8, 2024, the contents of which are hereby incorporated by reference in their entirety.

FIELD OF DISCLOSURE

Described herein are methods of making or rejuvenating solid sorbent composites including amines and a porous support. The solid sorbent composites exhibit high adsorption capacities for carbon dioxide. The solid sorbent composites exhibit desirable hydrothermal and cycling stability.

BACKGROUND

Using solid sorbent materials for carbon capture offers a viable and superior techno-economic alternative to traditional liquid-amine based carbon dioxide ($CO_2$) capture processes. Solid adsorbents tend to have better adsorption capacity, lower regeneration energy requirements, reduced system complexity and environmental and safety risks with respect to active liquid amines.

There are two types of sorbent materials based on their underlying sorption mechanisms. One type is physisorbent and the other type is chemisorbent. Physisorbents, such as activated carbon and zeolites, rely on van der Waals interactions, hydrogen bonding or other electrostatic forces to adsorb gaseous species such as $CO_2$ and water ($H_2O$). Chemisorbents, in particular, amine functionalized silica particles and metal-organic frameworks (MOF) etc., adsorb $CO_2$ through reversible chemical reactions and formation of ammonium carbamate, carbamic acid, ammonium carbonate and/or ammonium bicarbonate. Although physisorbent materials are relatively mature as compared to chemisorbent materials, one of the key drawbacks of physisorbent materials is their significantly reduced $CO_2$ adsorption capacity due to interference by other polar molecules such as $H_2O$, which are inevitably present in the atmosphere and flue gases. By contrast, as a result of chemical bonding, chemisorbent materials generally have superior selectivity of $CO_2$ adsorption over other interfering species such as nitrogen ($N_2$), oxygen ($O_2$), methane and carbon monoxide (CO), etc. with respect to their physisorbent counterparts.

An ideal chemisorbent material should have good adsorption capacity for $CO_2$, fast adsorption kinetics, easy and fast desorption properties under practical desorption conditions and good thermal and hydrothermal stability.

Amine functionalized sorbents presented either in a pristine powder format or hetero-composite formats can degrade over time during storage or field operation. The degradation could be due to oxidation in the presence of oxidative species such as oxygen, reduction in amine content due to evaporation or high air flow, and/or decomposition due to side reactions during field operation etc. There is a need to rejuvenate sorbent composites over time in comparison to disposing composite-containing contactors with degraded performance.

In this disclosure, solid sorbents including amines and a porous support, with high adsorption capacities for carbon dioxide, are developed and demonstrated. The solid sorbents exhibit desirable hydrothermal and cycling stability.

BRIEF DESCRIPTION

In one aspect, a method of making or rejuvenating an absorptive article is provided. The method includes (a) providing a starting article comprising a first amine with a first amine content, (b) providing a second amine, (c) bringing the starting article comprising a first amine in contact with the second amine, and (d) obtaining a treated article having a second amine content, wherein the second amine content is higher than the first amine content.

BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:

Figure 1 depicts an exemplary method for obtaining a treated article in accordance with the present disclosure;

Figure 2 depicts an exemplary method of making or rejuvenating a sorbent powder in accordance with the present disclosure;

Figure 3 depicts an exemplary method of making or rejuvenating a composite in accordance with the present disclosure;

Figure 4 depicts an exemplary method of making or rejuvenating a composite using an amine solution in accordance with the present disclosure;

Figure 5 depicts an exemplary method of making or rejuvenating a contactor coated with composite using an amine solution in accordance with the present disclosure;

Figure 6 depicts an exemplary method of making or rejuvenating a composite using an amine vapor in accordance with the present disclosure;

Figure 7 depicts an exemplary method of making or rejuvenating a sorbent powder using an amine solution in accordance with the present disclosure;

Figure 8 depicts an exemplary method of making or rejuvenating a sorbent powder including at partially covalently-bonded amines using an amine solution in accordance with the present disclosure;

Figure 9 depicts an exemplary method of making or rejuvenating a composite including a first amine that is not covalently bonded to the composite in accordance with the present disclosure;

Figure 10 depicts an exemplary method of making or rejuvenating a composite including a thermoset binder and a first amine in accordance with the present disclosure;

Figure 11 depicts an exemplary scheme of grafting $\gamma$-$Al_2O_3$ with (p-chloromethyl)phenyltrimethoxysilane (PCPT) and forming a sorbent comprising a covalently bonded amine through amine alkylation using an amine and an alkyl halogen (-Cl) in accordance with the present disclosure;

Figure 12 depicts exemplary TGA traces of $\gamma$-$Al_2O_3$, PCPT grafted $\gamma$-$Al_2O_3$, PCPT grafted $\gamma$-$Al_2O_3$ having covalently bonded spermine (GE351-SG2-39), and GE409 including GE351-SG2-39 with additional impregnated PEHA in accordance with the present disclosure;

Figure 13 depicts exemplary TGA traces of $\gamma$-$Al_2O_3$, PCPT grafted $\gamma$-$Al_2O_3$, PCPT grafted $\gamma$-$Al_2O_3$ having covalently bonded spermine (GE351-SG2-39), and GE411-A3170B including GE351-SG2-39 with additional impregnated PEHA and crosslinking agent (1,5-hexadiene diepoxide) in accordance with the present disclosure;

Figure 14 depicts exemplary TGA traces of $\gamma$-$Al_2O_3$, PCPT grafted $\gamma$-$Al_2O_3$, PCPT grafted $\gamma$-$Al_2O_3$ having covalently bonded spermine (GE351-SG2-39), and GE417-A3167B including GE351-SG2-39 with additional impregnated PEHA and crosslinking agent (1,5-hexadiene diepoxide) in accordance with the present disclosure; and

Figure 15 depicts an exemplary NMR analysis of 0.27 1,2-epoxybutane:spermine (O/N) in 600 $\mu$L of $CD_3OD$ with residual methanol (3.35 ppm) in accordance with the present disclosure.

Repeat use of reference characters in the present specification and drawings is intended to represent the same or analogous features or elements of the embodiment shown.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

## DETAILED DESCRIPTION

### Methods.

Disclosed herein is a method of making or rejuvenating an absorptive article. In some embodiments, the method includes (a) providing a starting article comprising a first amine with a first amine content, (b) providing a second amine, (c) bringing the starting article comprising a first amine in contact with the second amine, and (d) obtaining a treated article having a second amine content, wherein the second amine content is higher than the first amine content.

Turning to the figures, according to one embodiment as depicted in Figure 1, a method of making an article capable of adsorbing $CO_2$ comprises: (a) providing a starting article (100) comprising a first amine (101) with a first amine content (102), (b) providing a second amine (103), (c) bringing the starting article (100) comprising a first amine (101) in contact with the second amine (103), and (d) obtaining a treated article (105) having a second amine content (104), wherein the second amine content (104) is higher than the first amine content (102).

Nitrogen (N) content in weight percentage (N(wt%)) is used to quantify amine content. N(wt%) can be quantitively measured using Inductively Coupled Plasma (ICP) elemental analysis or together with carbon (C) content and hydrogen (H) content commonly known as CHN analysis.

In one embodiment, the starting article (100) has a first amine content (102) that is zero. In another embodiment, the second amine content (104) as expressed by N(wt%) is higher than the first amine content (102) by 0.1wt%. In another embodiment, the second amine content (104) as expressed by N(wt%) is higher than the first amine content (102) by 0.5wt%. In another embodiment, the second amine content (104) expressed as N(wt%) is higher than the first amine content (102) by 1.0wt%. In another embodiment, the second amine content (104) as expressed as N(wt%) is higher than the first amine content (102) by 1.0-30.0wt%. In another embodiment, the second amine content (104) expressed by N(wt%) is higher than the first amine content (102) by 1.0-20.0wt%. In another embodiment, the second amine content (104) expressed as N(wt%) is higher than the first amine content (102) by 1.0-5.0wt%. In another embodiment, the second amine content (104) expressed as N(wt%) is higher than the first amine content (102) by 5.0-25.0wt%. In another embodiment, the second amine content (104) expressed as N(wt%) is higher than the first amine content (102) by 5.0-20.0wt%. **In** another embodiment, the second amine content (104) expressed as N(wt%) is higher than the first amine content (102) by 5.0-15.0wt%. **In** another embodiment, the second amine content (104) expressed as N(wt%) is higher than the first amine content (102) by 5.0-10.0wt%. **In** another embodiment, the second amine content (104) expressed as N(wt%) is higher than the first amine content (102) by 10.0-20.0wt%. **In** another embodiment, the second amine content (104) expressed as N(wt%) is higher than the first amine content (102) by 10.0-15.0wt%.

The method may optionally comprise a step of washing the starting article (100) comprising a first amine (101) with a first amine content (102) to extract or remove at least partial the a first amine (101) or degraded byproducts before the starting article (100) comprising a first amine (101) gets brought in contact with the second amine (103). The method may optionally comprise a drying step to remove any solvents or any volatile chemical species after the starting article comprising a first amine (101) gets brought in contact with the second amine (103). The drying step can be performed in at ambient condition with air flow or purging gases, or any other conditions with different combinations of heat, air flow, vacuum etc.

According to one embodiment, a composite of sorbent-containing film can be prepared by: (1) creating a slurry formulation comprising a solvent, a functionalized sorbent and a binder. The solvent may be either aqueous or organic or a mixture with any ratios. The binder can generally be a polymer or precursors including a polymer, mixture of monomers etc. that cross-link upon curing; (2) optionally, additional additives may be incorporated to improve slurry rheology and coating quality as needed. The additives need to be compatible with the solvent and the functionalized sorbent to facilitate the linkage of sorbent particles and even dispersion through the solvent; (3) applying the slurry onto a substrate by a coating technique such as but not limited to spray coating, dip coating, flow coating, spin coating, drop coating etc.; (4) drying to remove solvents; and optionally (5) curing under heat or irradiation with UV light etc. The substrate may be selected from metals such as aluminum, copper, stainless steel etc., or ceramic materials, polymer materials or combinations of such. Further, the substrate may have additional surface coating for adhesion, anti-corrosion, anti-scratching etc., which is known in the art. The substrate can be in any shape or form including but not limited to flat or non-flat plates, structured fins and tubes such as heater exchangers, monolith structures, additively 3D printed parts with any shape or geometry etc.

According to another embodiment, a sorbent composite coating can be prepared by: (1) creating a slurry formulation comprising a solvent, a binder, a support with or free of any amines, and at least one amine material. The solvent may be either aqueous or organic or a mixture with any ratios. The binder material can generally be a polymer or precursors including a polymer, mixture of monomers etc. that cross-link upon curing; (2) optionally, additional additives may be incorporated to improve slurry rheology and coating quality as needed. The additives need to be compatible with the solvent and the functionalized sorbent to facilitate the linkage of sorbent particles and even dispersion through the solvent; (3) applying the slurry onto a substrate by a coating technique such as but not limited to spray coating, dip coating, flow coating, spin coating, drop coating etc.; (4) drying to remove solvents; and optionally (5) curing under heat or irradiation with UV light etc.

According to another embodiment as depicted in Figure 2, a method of making or rejuvenating a sorbent powder comprises: (a) providing a starting sorbent powder (200) comprising a first amine (201) with a first amine content (202), (b) providing a second amine (203), (c) bringing the starting sorbent powder (200) comprising a first amine (201) in contact with the second amine (203), and (d) obtaining a treated sorbent powder (205) having a second amine content (204), wherein the second amine content (204) is higher than the first amine content (202).

According to another embodiment as depicted in Figure 3, a method of making or rejuvenating a composite comprises: (a) providing a starting composite (300) comprising a first amine (301) with a first amine content (302), (b)

providing a second amine (303), (c) bringing the starting composite (300) comprising a first amine (301) in contact with the second amine (303), and (d) obtaining a treated composite (305) having a second amine content (304), wherein the second amine content (304) is higher than the first amine content (302).

In one embodiment, the starting composite (300) comprises at least polymeric binder that is free of amine, resulting in a first amine content (302) of zero. In another embodiment, the starting composite (300) comprises at least one thermoset polymeric binder where the thermoset polymeric binder is cured by an amine-containing curing agent. The final binder after thermosetting comprises amines groups from the curing agent at least partially covalently bonded to the binder, resulting in a non-zero first amine content (302). In another embodiment, the amine functionalized sorbent presented as a composite comprises at least one thermoset polymeric binder where the thermoset polymeric binder is cured by an amine-containing curing agent and additional amine moieties that are not chemically bonded to the binder, also resulting in a non-zero first amine content (302).

According to another embodiment as depicted in Figure 4, a method of making or rejuvenating a composite comprises: (a) providing a starting composite (400) comprising a first amine (401) with a first amine content (402), (b) providing a second amine (403) in a solution (406) having a solvent (407), (c) bringing the starting composite (400) comprising a first amine (401) in contact with the second amine (403) in the solution (406) having a solvent (407), and (d) obtaining a treated composite (405) having a second amine content (404), wherein the second amine content (404) is higher than the first amine content (402).

The method may optionally comprise a drying step to remove any solvents or any volatile chemical species after the starting composite (400) comprising a first amine (401) gets brought in contact with the second amine (403). The drying step can be performed in at ambient condition with air flow or purging gases, or any other conditions with different combinations of heat, air flow, vacuum etc.

According to another embodiment as depicted in Figure 5, a method of making or rejuvenating a contactor coated with a composite comprises: (a) providing a contactor (508) coated with a starting composite (500) comprising a first amine (501) with a first amine content (502), (b) providing a second amine (503) in solution (506) having a solvent (507), (c) bringing the starting composite (500) comprising a first amine (501) in contact with the second amine (503) in solution (506) having a solvent (507), and (d) obtaining a contactor (508) coated with a treated composite (505) having a second amine content (504), wherein the second amine content (504) is higher than the first amine content (502).

According to another embodiment as depicted in Figure 6, a method of making or rejuvenating a composite comprises: (a) providing a starting composite (600) comprising a first amine (601) with a first amine content (602), (b) providing a second amine (603) in vapor phase, optionally with a carrier gas such as $N_2$ (606), (c) bringing the starting composite (600) comprising a first amine (601) in contact with the second amine (603) in vapor phase, and (d) obtaining a treated composite (605) having a second amine content (604), wherein the second amine content (604) is higher than the first amine content (602).

According to another embodiment as depicted in Figure 7, a method of making or rejuvenating a sorbent powder comprises: (a) providing a starting sorbent powder (700) comprising a first amine (701) with a first amine content (702), (b) providing a second amine (703) in a solution (706) having a solvent (707), (c) bringing the starting sorbent powder (700) comprising a first amine (701) in contact with the second amine (703) in the solution (706) having a solvent (707), and (d) obtaining a treated sorbent powder (705) having a second amine content (704), wherein the second amine content (704) is higher than the first amine content (702).

According to another embodiment as depicted in Figure 8, a method of making or rejuvenating a sorbent powder comprises: (a) providing a starting sorbent powder (800) comprising a first amine (801) with a first amine content (802), wherein the first amine is at least partially covalently bonded to the sorbent powder (800), (b) providing a second amine (803) in a solution (806) having a solvent (807), (c) bringing the starting sorbent powder (800) comprising a first amine (801) in contact with the second amine (803) in the solution (806) having a solvent (807), and (d) obtaining a treated sorbent powder (805) having a second amine content (804), wherein the second amine content (804) is higher than the first amine content (802).

According to another embodiment as depicted in Figure 9, a method of making or rejuvenating a composite comprises: (a) providing a starting composite (900) comprising a first amine (901) with a first amine content (902), wherein the first amine is at least partially covalently bonded to the composite (900), (b) providing a second amine (903) in a solution (906) having a solvent (907), (c) bringing the starting composite (900) comprising a first amine (901) in contact with the second amine (903) in the solution (906) having a solvent (907), and (d) obtaining a treated composite (905) having a second amine content (904), wherein the second amine content (904) is higher than the first amine content (902).

According to another embodiment as depicted in Figure 10, a method of making or rejuvenating a composite comprises: (a) providing a starting composite (1000) comprising a first amine (1001) with a first amine content (1002) and a thermoset binder (1005), (b) providing a second amine (1003) in an aqueous solution (1006), (c) bringing the starting composite (1000) comprising a first amine (1001) in contact with the second amine (1003) in the aqueous solution (1006), and (d) obtaining a treated composite (1007) comprising a thermoset binder (1005) and having a second amine content (1004), wherein the second amine content (1004) is higher than the first amine content (1002).

Sorbents.

Described herein are solid sorbents including amines and a porous support. In some embodiments, the amines are at least partially covalently bonded to the porous support. In some embodiments, the amines are covalently bonded to the porous support. In some embodiments, the amines are not covalently bonded to the porous support.

The solid sorbents exhibit high adsorption capacities for carbon dioxide. The solid sorbents exhibit desirable hydrothermal and cycling stability.

The sorbent material is capable of binding certain fluids, such as carbon dioxide ($CO_2$), water ($H_2O$), oxygen ($O_2$), or other gas molecules that may be present in air or form as result of a decomposition reaction (e.g., combustion).

Generally, solid sorbents in accordance with the present disclosure may be used with any suitable compositions, systems, and methods known in the art that facilitate the solid sorbents. The solid sorbents are not limited to any particular embodiment disclosed herein. Exemplary compositions, systems, and methods are found in PCT/US2023/082729, the contents of which are incorporated by reference herein.

Generally, the solid sorbents may include any functionalization ligand known in the art that facilitate the solid sorbents.

In some embodiments, the functionalization ligand includes at least one amine selected from the group consisting of primary amines, secondary amines, tertiary amines, and combinations thereof. In some embodiments, the functionalization ligand includes at least one primary amine or at least one secondary amine.

In some embodiments, the functionalization ligand includes a polyamine. In some embodiments, the functionalization ligand includes at least one amine selected from the group consisting of monoamines, diamines, triamines, tetra-amines, penta-amines, hexa-amines, polyamines, and combinations thereof.

Generally, the polyamine may include any number of amine groups known in the art suitable to facilitate the solid sorbent. In some embodiments, the polyamine includes a total number of amine groups in a range of from about 2 to about 10. In some embodiments, the polyamine includes a total number of amine groups in a range of from about 2 to about 6. In some embodiments, the polyamine includes a total number of amine groups in a range of from about 2 to about 4. In some embodiments, the polyamine includes 2, 3, 4, 5, 6, 7, 8, 9, or 10 amine groups.

In some embodiments, the functionalization ligand is selected from the group consisting of polyamine ligands including at least one cyclic unit, aminosilicone ligands, amine ligands, monoamine ligands, diamine ligands, triamine ligands, tetra-amine ligands, penta-amine ligands, hexa-amine ligands, polyamine ligands, alkylamine ligands, and amino-alcohol ligands. Exemplary ligands include, but are not limited to, ethylenediamine, N-methylethylenediamine, N-ethylethylenediamine, N,N-dimethylethylenediamine, N,N-diethylethylenediamine, di(N-methyl)ethylene diamine, N-isopropylethylenediamine, N,N-dimethyl-N-methylethylene diamine, di(N,N-dimethyl)ethylene diamine, N,N-diisopropylethylene diamine, 2,2-dimethyl-1,3-diaminopropane, 1,3-diaminopentane, diethylenetriamine, N-(2-aminoethyl)-1,3-propanediamine, bis(3-aminopropyl)amine, N-(3-aminopropyl)-1,4-diaminobutane (spermidine), triethylenetetramine, N,N'-bis(2-aminoethyl)-1,3-propanediamine, 1,2-bis(3-aminopropylamino)ethane, N,N'-bis(3-aminopropyl)-1,3-propanediamine, N,N'-bis(3-aminopropyl)-1,4-diaminobutane (spermine), tetraethylenepentamine, and/or combinations thereof.

In some embodiments, the functionalization ligand is selected from the group consisting of spermine, pentaethylenehexamine (PEHA), polyethyleneimine (PEI) of any molecular weight, epoxybutane modified spermine, epoxybutane-modified PEHA, epoxybutane-modified PEI, and combinations thereof.

In some embodiments, the functionalized sorbent has a class-II, or class-III or class-IV isotherm for pure water. In some embodiments, the functionalized sorbent has a class-II isotherm for pure water. In some embodiments, the functionalized sorbent has a class-III isotherm for pure water. In some embodiments, the functionalized sorbent has a class-IV isotherm for pure water.

In some embodiments, the functionalized sorbent has a water uptake at high relative humidity of average < 1 $H_2O$ molecule per amine. In some embodiments, the high relative humidity refers to relative humidity of 50% and above at ambient temperatures such as, but not limited to, -20°C to 40°C. In some embodiments, the high relative humidity refers to relative humidity of 60% and above at ambient temperatures such as, but not limited to, -20°C to 40°C. In some embodiments, the high relative humidity refers to relative humidity of 70% and above at ambient temperatures such as, but not limited to - 20°C to 40°C. In some embodiments, the high relative humidity refers to relative humidity of 60% and above at temperature ranging from 40°C to 60°C. In some embodiments, the high relative humidity refers to relative humidity of 70% and above at temperature ranging from 40°C to 60°C. In some embodiments, the high relative humidity refers to relative humidity of 70% and above at temperature of 60°C and higher.

Generally, the functionalized sorbent may have any suitable desorption temperature known in the art that facilitates the functionalized sorbent. The desorption temperature refers to a temperature required for regenerating sorbent materials or sorbent composites to at least partially desorb $CO_2$ and $H_2O$. Each desorption module or sub-module including the functionalized sorbent may have a uniform temperature profile, a gradient temperature profile, or a discrete temperature profile.

In some embodiments, the functionalized sorbent has a desorption temperature in a range of from about 40 °C to about 250 °C. In some embodiments, the functionalized sorbent has a desorption temperature in a range of from about 120 °C to about 250 °C. In some embodiments, the functionalized sorbent has a desorption temperature in a range of from about 40 °C to about 120 °C. In some embodiments, the functionalized sorbent has a desorption temperature in a range of from about 40 °C to about 100 °C. In some embodiments, the functionalized sorbent has a desorption temperature in a range of from about 40 °C to about 90 °C.

In some embodiments, the functionalized sorbent has a desorption temperature of at least about 40 °C, at least about 50 °C, at least about 60 °C, at least about 70 °C, at least about 80 °C, at least about 90 °C, at least about 100 °C, at least about 110 °C, at least about 120 °C, at least about 130 °C, at least about 140 °C, at least about 150 °C, at least about 160 °C, at least about 170 °C, at least about 180 °C, at least about 190 °C, at least about 200 °C, at least about 210 °C, at least about 220 °C, at least about 230 °C, or at least about 240 °C. In some embodiments, the functionalized sorbent has a desorption temperature of at most about 50 °C, at most about 60 °C, at most about 70 °C, at most about 80 °C, at most about 90 °C, at most about 100 °C, at most about 110 °C, at most about 120 °C, at most about 130 °C, at most about 140 °C, at most about 150 °C, at most about 160 °C, at most about 170 °C, at most about 180 °C, at most about 190 °C, at most about 200 °C, at most about 210 °C, at most about 220 °C, at most about 230 °C, at most about 240 °C, or at most about 250 °C.

Generally, the functionalized sorbent may have any suitable adsorption temperature known in the art that facilitates the functionalized sorbent. The adsorption temperature refers to a temperature required for sorbent materials or sorbent composites to at least partially adsorb $CO_2$ and $H_2O$. The adsorption temperature refers to the temperature of sorbent materials, temperature of gas streams, temperature of adsorption modules or sub-modules, or combinations thereof. Each adsorption module or sub-module including the functionalized sorbent may have a uniform temperature profile, a gradient temperature profile, or a discrete temperature profile.

In some embodiments, the functionalized sorbent has an adsorption temperature in a range of from about -40 °C to about 150 °C. In some embodiments, the functionalized sorbent has an adsorption temperature in a range of from about 0 °C to about 80 °C. In some embodiments, the functionalized sorbent has an adsorption temperature in a range of from about 0 °C to about 70 °C. In some embodiments, the functionalized sorbent has an adsorption temperature in a range of from about 0 °C to about 40 °C.

In some embodiments, the functionalized sorbent has a desorption temperature in a range of from about 40 °C to about 120 °C. In some embodiments, the functionalized sorbent has a desorption temperature in a range of from about 40 °C to about 100 °C. In some embodiments, the functionalized sorbent has a desorption temperature in a range of from about 40 °C to about 90 °C.

In some embodiments, the functionalized sorbent has an adsorption temperature of at least about -40 °C, at least about -30 °C, at least about -20 °C, at least about -10 °C, at least about 0 °C, at least about 10 °C, at least about 20 °C, at least about 30 °C, at least about 40 °C, at least about 50 °C, at least about 60 °C, at least about 70 °C, at least about 80 °C, at least about 90 °C, at least about 100 °C, at least about 110 °C, at least about 120 °C, at least about 130 °C, or at least about 140 °C.

In some embodiments, the functionalized sorbent has an adsorption temperature of at most about -30 °C, at most about -20 °C, at most about -10 °C, at most about 0 °C, at most about 10 °C, at most about 20 °C, at most about 30 °C, at most about 40 °C, at most about 50 °C, at most about 60 °C, at most about 70 °C, at most about 80 °C, at most about 90 °C, at most about 100 °C, at most about 110 °C, at most about 120 °C, at most about 130 °C, at most about 140 °C, or at most about 150 °C.

Generally, the sorbent may be any suitable sorbent known in the art that facilitates the functionalized sorbent described herein. In some embodiments, the sorbent is selected from the group consisting of coordination framework compounds, metal-organic framework (MOF) compounds, porous coordination polymers (PCPs), covalent organic framework (COF) compounds, zeolitic imidazolate framework (ZIF) compounds, crystalline porous materials, crystalline open frameworks, reticular chemistry, silica particles, zeolites, silico-alumino-phosphates (SAPOs), alumino-phosphates (AlPOs), polyaromatic frameworks (PAFs), hydrogen bonded framework (HOF) compounds, porous organic salts, activated carbons, molecular organic solids, and combinations thereof.

As used herein, MOF compounds are a class of compounds including metal ions or clusters coordinated to organic ligands to form one-, two-, or three-dimensional structures. The metal ions or clusters act as joints and are bound by multidirectional organic ligands, which act as linkers in a network structure. MOF compounds have a modular nature that allows for synthetic tunability, which affords fine chemical and structural control. Properties such as porosity, stability, particle morphology, and conductivity can be tailored for specific applications.

In many embodiments, the sorbent is a MOF compound including a MOF metal or metal-containing cluster and a MOF linker.

In some embodiments, the MOF metal may be any suitable MOF metal known in the art that facilitates the solid sorbent described herein. In other embodiments, the MOF metal is a metal selected from the group consisting of alkali metals, alkaline earth metals, transition metals, Ca, Mn, Cr, Fe, Co, Ni, Cu, Zn, ions thereof, hydrates thereof, salts thereof, halides thereof, fluorides thereof, chlorides thereof, bromides thereof, iodides thereof, nitrates thereof, acetates thereof,

sulfates thereof, phosphates thereof, carbonates thereof, oxides thereof, formates thereof, carboxylates thereof, and combinations thereof. In some embodiments, the MOF metal includes Mg.

In some embodiments, the MOF metal-containing cluster may be any suitable MOF metal-containing cluster known in the art that facilitates the solid sorbent described herein. In some embodiments, the MOF metal-containing cluster includes an MOF metal node and a linker strut, with the MOF metal and the linker each defined as described herein. In other embodiments, the MOF metal-containing cluster includes an MOF metal-oxy cluster.

In some embodiments, the MOF linker may be any suitable MOF linker known in the art that facilitates the solid sorbent described herein. Generally, the geometry and connectivity of a linker contribute to the structure of the resulting MOF compound. Adjustments of linker geometry, length, ratio, and functional-group can tune the size, shape, and internal surface property of a MOF compound for a targeted application.

In some embodiments, the MOF linker is a linker selected from the group consisting of polytopic linkers, ditopic linkers, tritopic linkers, tetratopic linkers, pentatopic linkers, hexatopic linkers, heptatopic linkers, octatopic linkers, mixed linkers, desymmetrized linker, metallo linkers, N-heterocyclic linkers, and combinations thereof.

In some embodiments, the MOF linker is a linker selected from the group consisting of polytopic linkers, 4,4'-dihydroxy-[1,1'-biphenyl]-3,3'-dicarboxylic acid ($H_4$dobpdc), 4,4'-dioxidobiphenyl-3,3'-dicarboxylate (dobpdc$^{4-}$), 4,4"-dioxido-[1,1':4',1"-terphenyl]-3,3"-dicarboxylate (dotpdc$^{4-}$), 2,5-dioxidobenzene-1,4-dicarboxylate (dobdc$^{4-}$), 4,6-Dihydroxyisophthalic acid (m-dobdc$^{4-}$), 3,3'-dioxido-biphenyl-4,4'-dicarboxylate (para-carboxylate-dobpdc$^{4-}$), 4,4'-[oxalylbis(imino)]bis(2-hydroxybenzoic acid) ($H_4$ODA), 4,4'-[1,4-phenylenebis-(carbonylimino)]bis(2-hydroxybenzoic acid) ($H_4$TDA), 4,4'-Dihydroxyazobenzene-3,3'-dicarboxylic acid ($H_4$OSA), protonated, partially and fully deprotonated forms thereof, and combinations thereof. As another example, in some embodiments, the MOF linker is a linker selected from the group consisting of dicarboxylates (e.g., terephthalic acid), tricarboxylates (e.g., 1,3,5-benzentricarboxylic acid), azolates, tetrazolates, and combinations thereof.

As another example, in some embodiments, the MOF linker is a dicarboxylic acid linker selected from the group consisting of 1,4-butanedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxylic acid, heptadecanedicarboxylic acid, acetylenedicarboxylic acid, 1,2-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-carboxylic acid, 4,4'-diamino-1,1'-diphenyl-3,3'-dicarboxylic acid, 4,4'-diaminodiphenyl-3,3'-dicarboxylic acid, benzidine-3,3'-dicarboxylic acid, 1,4-bis-(phenylamino)benzene-2,5-dicarboxylic acid, 1,1'-dinaphthyl-8,8'-dicarboxylic acid, 7-chloro-8-methylquinoline-2,3-dicarboxylic acid, 1-anilinoanthoursaquinone-2,4'-dicarboxylic acid, polytetrahydrofuran-250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro) phenylpyrazoline-4,5-dicarboxylic acid, 1,4,5,6,7,7,-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidine-4,5-cisdicarboxylic acid, 2,2'-biquinoline-4,4'-dicarboxylic acid, pyridine-3,4-dicarboxylic acid, 3,6,9-trioxaundecanedicarboxylic acid, o-hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diaminodiphenyletherdiimidedicarboxylic acid, 4,4'-diaminodiphenylmethanediimidedicarboxylic acid, 4,4'-diaminodiphenylsulfonediimidedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthoursacene-2,3-dicarboxylic acid, 2'-3'-diphenyl-p-terphenyl-4,4"-dicarboxylic acid, diphenylether-4,4'-dicarboxylic acid, imidazole-4,5-dicarboxylic acid, 4(1H)-oxothiochoursomene-2,8-dicarboxylic acid, 5-t-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1-amino-4-methyl-9,10-dioxo-9,10-dihydroanthoursacene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorobenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1H-pyrrole-3,4-dicarboxylic acid, anthoursaquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid, 1,14-tetradecanedicarboxylic acid, 5,6-dehydronorbornane-2,3-dicarboxylic acid, 5-ethyl-2,3-pyridinedicarboxylic acid, and combinations thereof.

As another example, in some embodiments, the MOF linker is a tricarboxylic acid linker selected from the group consisting of 2-hydroxy-1,2,3-propanetricarboxylic acid, 7-chloro-2,3,8-quinolinetricarboxylic acid, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxylic acid, 1,2,3-propanetricarboxylic acid, aurinetricarboxylic acid, and combinations thereof.

As another example, in some embodiments, the MOF linker is a tetracarboxylic acid linker selected from the group consisting of 1,1-dioxide-perylo[1,12-BCD]thiophene-3,4,9,10-tetracarboxylic acid, perylenetetracarboxylic acids, perylene-3,4,9,10-tetracarboxylic acid, perylene-1,12-sulfone-3,4,9,10-tetracarboxylic acid, butanetetracarboxylic acids, 1,2,3,4-butanetetracarboxylic acid, meso-1,2,3,4-butanetetracarboxylic acid, decane-2,4,6,8-tetracarboxylic acid, 1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octanetetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydrofurantetracarboxylic acid, cyclopentanetetracarboxylic acids, cyclopentane-1,2,3,4-tetracarboxylic acid, and combinations thereof.

In the exemplary embodiment, the MOF linker is 4,4'-dihydroxy-[1,1'-biphenyl]-3,3'-dicarboxylic acid ($H_4$dobpdc) and/or 4,4'-dioxidobiphenyl-3,3'-dicarboxylate (dobpdc$^{4-}$). In some embodiments, dobpdc includes 4,4'-dihydroxy-[1,1'-biphenyl]-3,3'-dicarboxylic acid, its mono-carboxylate form, its di-carboxylate form, its mono-phenoxide form, its di-phenoxide form, and combinations thereof.

In some embodiments, the MOF linker is one or more of the following linkers:

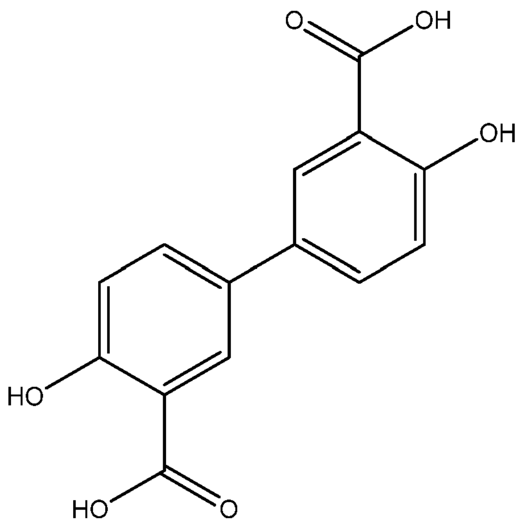

4,4'-dihydroxy-[1,1'-biphenyl]-3,3'-dicarboxylic acid ;

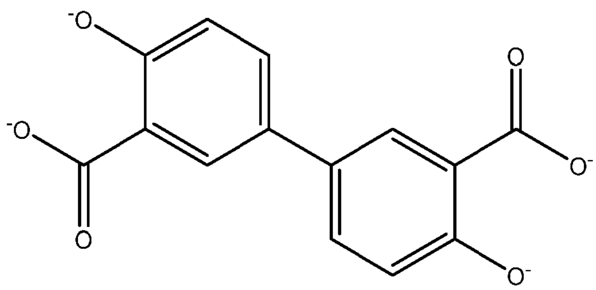

4,4'-dioxidobiphenyl-3,3'-dicarboxylate ;

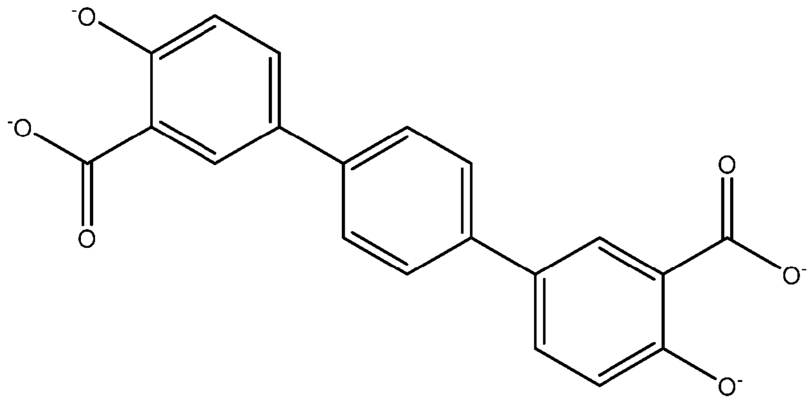

4,4"-dioxido-[1,1':4',1"-terphenyl]-3,3"-dicarboxylate ;

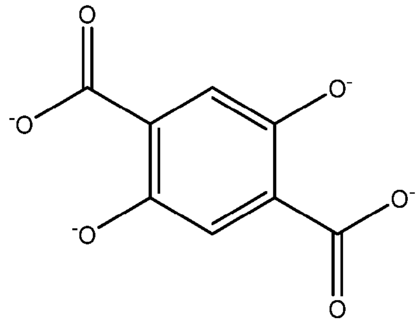

2,5-dioxidobenzene-1,4-dicarboxylate ;

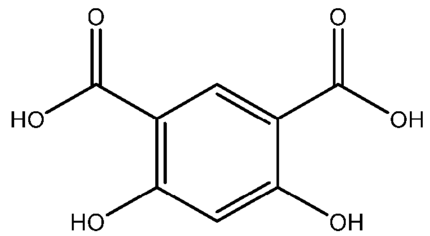

4,6-Dihydroxyisophthalic acid ;

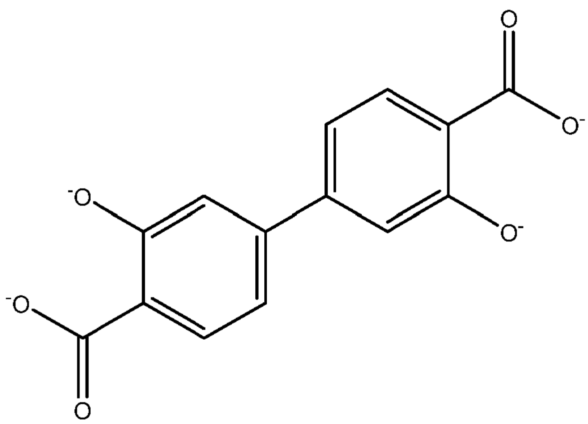

3,3'-dioxido-biphenyl-4,4'-dicarboxylate ;

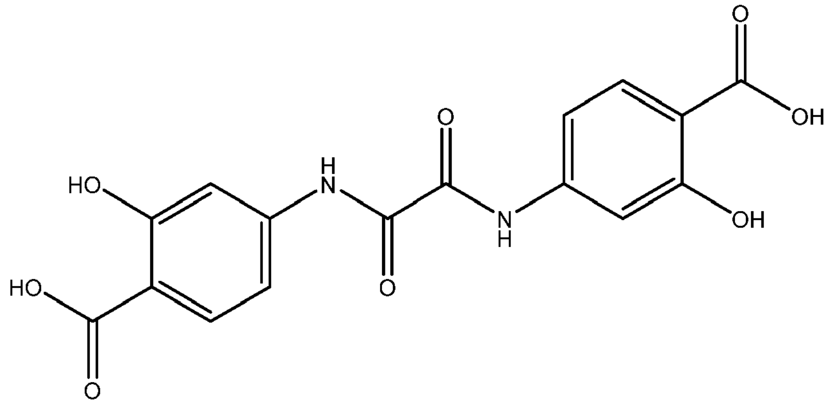

4,4'-[oxalylbis(imino)]bis(2-hydroxybenzoic acid) ;

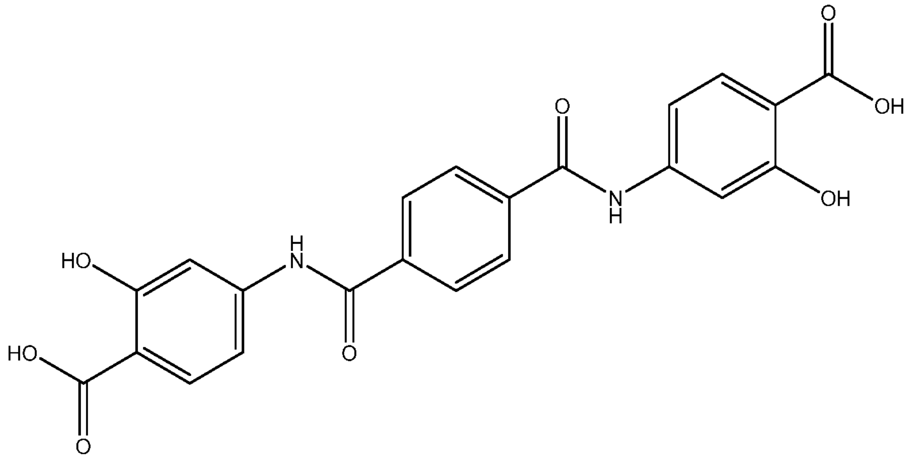

4,4'-[1,4-phenylenebis-(carbonylimino)]bis(2-hydroxybenzoic acid) ;
and/or

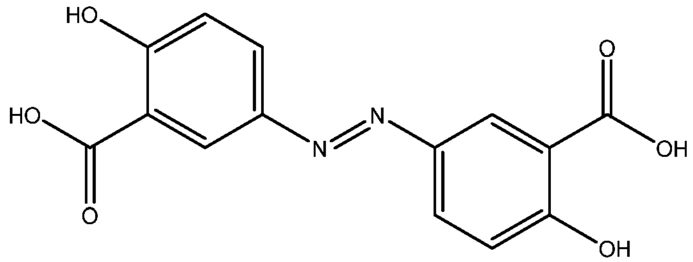

4,4'-Dihydroxyazobenzene-3,3'-dicarboxylic acid

In some embodiments, the MOF compound is a MOF compound of the MOF-74 family. In some embodiments, the MOF compound is a MOF compound of the MOF-274 family. In some embodiments, the MOF compound is a MOF compound of the MOF-303 family. In some embodiments, the MOF compound is $Mg_2$(dobpdc).

In some embodiments, the solid sorbent does not include a MOF.

In some embodiments, the solid sorbent includes a non-MOF sorbent. In some embodiments, the solid sorbent includes a mesoporous oxide support. In some embodiments, the solid sorbent includes a mesoporous oxide support selected from the group consisting of silica, alumina, zirconia, and combinations thereof. In some embodiments, the solid sorbent includes a porous polymer.

In some embodiments, the solid sorbent does not include a non-MOF.

Generally, amine-functionalized MOFs tend to have better $CO_2$ capacity, expressed as amount of $CO_2$ captured per weight of sorbent, such as $gCO_2$/gSorbent or $mmolCO_2$/gSorbent, under low $CO_2$ concentrations, such as DAC relevant conditions, compared to other sorbents. Non-MOFs like mesoporous silicas and aluminas have potentially lower

costs and may have improved kinetics compared to other sorbents.

Amines can be physically impregnated, which imparts low stability, or chemically grafted, which provides more stability but lower $CO_2$ capacity based on which amine is chosen and the grafting method.

One or more of reduced particle sizes of sorbents, increased aspect ratios of sorbents, and aqueous sorbent synthesis leads to sorbents having significantly improved $CO_2$ uptake kinetics.

Generally, the sorbent may include any suitable particle size known in the art that facilitates the functionalized sorbent described herein. In some embodiments, the sorbent has an average primary particle length ≤ 50 μm. In some embodiments, the sorbent has an average primary particle length ≤ 30 μm. In some embodiments, the sorbent has an average primary particle length ≤ 10 μm. In some embodiments, the sorbent has an average primary particle length ≤ 5 μm. In some embodiments, the sorbent has an average particle length ≤ 3 μm, ≤ 2.9 μm, ≤ 2.8 μm, ≤ 2.7 μm, ≤ 2.6 μm, ≤ 2.5 μm, ≤ 2.4 μm, ≤ 2.3 μm, ≤ 2.2 μm, ≤ 2.1 μm, ≤ 2 μm, ≤ 1.9 μm, ≤ 1.8 μm, ≤ 1.7 μm, ≤ 1.6 μm, ≤ 1.5 μm, ≤ 1.4 μm, ≤ 1.3 μm, ≤ 1.2 μm, ≤ 1.1 μm, ≤ 1 μm, ≤ 0.9 μm, ≤ 0.8 μm, ≤ 0.7 μm, ≤ 0.6 μm, ≤ 0.5 μm, ≤ 0.4 μm, ≤ 0.3 μm, ≤ 0.2 μm, or ≤ 0.1 μm. In some embodiments, the sorbent has an average primary particle length ≥ 5 μm. In some embodiments, the sorbent has an average primary particle length ≥ 3 μm, ≥ 2.9 μm, ≥ 2.8 μm, ≥ 2.7 μm, ≥ 2.6 μm, ≥ 2.5 μm, ≥ 2.4 μm, ≥ 2.3 μm, ≥ 2.2 μm, ≥ 2.1 μm, ≥ 2 μm, ≥ 1.9 μm, ≥ 1.8 μm, ≥ 1.7 μm, ≥ 1.6 μm, ≥ 1.5 μm, ≥ 1.4 μm, ≥ 1.3 μm, ≥ 1.2 μm, ≥ 1.1 μm, ≥ 1 μm, ≥ 0.9 μm, ≥ 0.8 μm, ≥ 0.7 μm, ≥ 0.6 μm, ≥ 0.5 μm, ≥ 0.4 μm, ≥ 0.3 μm, ≥ 0.2 μm, or ≥ 0.1 μm.

Generally, the sorbent may include any suitable aspect ratio known in the art that facilitates the functionalized sorbent described herein. As used herein, the aspect ratio is the ratio between the average width of the sorbent and the average length of the sorbent. In some embodiments, the sorbent has an aspect ratio in a range of from about 0 to about 1. In some embodiments, the sorbent has an aspect ratio ≤ 1, ≤ 0.9, ≤ 0.8, ≤ 0.7, ≤ 0.6, ≤ 0.5, ≤ 0.4, ≤ 0.3, ≤ 0.2, or ≤ 0.1. In some embodiments, the sorbent has an aspect ratio ≥ 0.9, ≥ 0.8, ≥ 0.7, ≥ 0.6, ≥ 0.5, ≥ 0.4, ≥ 0.3, ≥ 0.2, ≥ 0.1, or ≥ 0.

In some embodiments, the particle sizes are individual particle sizes. Individual particle size measurements may be made according to any suitable means known in the art, such as by measuring particle sizes in an SEM image.

In some embodiments, the particle size measurements are average particle size measurements. Average particle size measurements may be made according to any suitable means known in the art, such as by analyzing particle size distribution information.

Generally, the particle size of the sorbent may be controlled, altered, or reduced according to any suitable technique known in the art that facilitates the functionalized sorbent described herein. **In** some embodiments, suitable techniques for controlling, altering, or reducing particle size include mechanical grinding (e.g., mortar and pestling), using a microfluidizer, dry milling, wet milling, chemical size reduction (e.g., incorporation of a crystal growth inhibitor), acoustic cavitation, hydrodynamic cavitation, and combinations thereof.

Generally, the sorbent may be in any suitable form known in the art that facilitates the functionalized sorbent described herein. **In** some embodiments, the sorbent is in a form selected from the group consisting of powders, pellets, composites, composites mixed with binders, films, coatings, aqueous coatings, packed beds, columns, monoliths, and combinations thereof. Additional substrates may be present. For example, sorbent composites may be coated on a flat substrate, structured substrate, or monolith substrate or support. Substrates may also have additional functionalities, such as a heating plate, heat exchange, or heat conductor, etc.

Amine functionalized sorbent materials with improved amine utilization efficiency.

Described herein is a functionalized sorbent. The functionalized sorbent includes: (a) a support bonded to a modifier according to Formula I

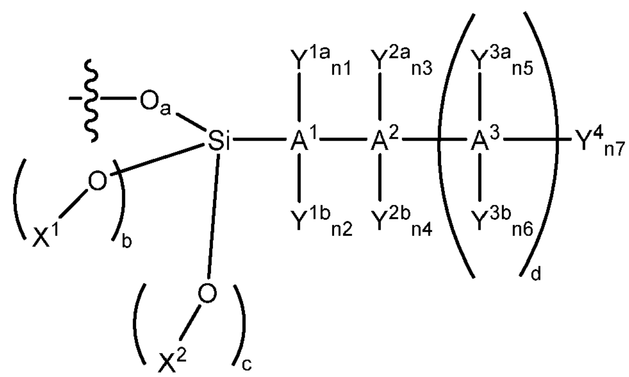

(Formula I);

(b) a functionalization ligand including a polyamine; and (c) optionally a binder material.

In Formula I, the wavy line indicates the bond to the support; $X^1$ is a first alkyl group; $X^2$ is a second alkyl group; a is 1, 2, or 3; b is 0, 1, or 2; c is 0, 1, or 2; a+b+c is equal to 3; $A^1$ is C, alkyl, cycloalkyl, heterocycloalkyl, aryl, or heteroaryl; $A^2$ is C, N, O, alkyl, cycloalkyl, heterocycloalkyl, aryl, or heteroaryl; $A^3$ is C, N, O, alkyl, cycloalkyl, heterocycloalkyl, aryl, or

heteroaryl; $Y^{1a}$, $Y^{1b}$, $Y^{2a}$, $Y^{2b}$, $Y^{3a}$, $Y^{3b}$, and Y are each independently hydrogen, halogen, substituted or unsubstituted alkyl, substituted or unsubstituted heteroalkyl, substituted or unsubstituted aryl, substituted or unsubstituted heteroaryl, substituted or unsubstituted heterocycloalkyl, or branched alkyl hydrocarbon; n1, n2, n3, n4, n5, n6, and n7 are each independently 0 or 1; and d is an integer greater than or equal to 3.

In some embodiments, a is 3, b is 0, and c is 0. In these embodiments, there are three Si-O-support bonds in the functionalized sorbent.

In some embodiments, a is 2, b is 1, and c is 0. In some embodiments, a is 2, b is 0, and c is 1. In these embodiments, there are two Si-O-support bonds in the functionalized sorbent.

In some embodiments, a is 1, b is 2, and c is 0. In some embodiments, a is 1, b is 0, and c is 2. In some embodiments, a is 1, b is 1, and c is 1. In these embodiments, there is one Si-O-support bond in the functionalized sorbent.

In some embodiments, the functional sorbent comprises a plurality of modifiers according to Formula I. In some embodiments, the plurality of modifiers comprises identical modifiers. In some embodiments, the plurality of modifiers comprises at least two modifiers that are different. In some embodiments, the plurality of modifiers comprises a random mixture of modifiers according to Formula I.

In some embodiments, the support bonded to the modifier is formed by a silanization reaction. In some embodiments, the values of a, b, and c may be adjusted by silanization conditions used to form the support bonded to the modifier, including but not limited to, reaction conditions, reaction time, density of surface hydroxy groups present in a starting support material, and a use of other surface hydroxylation techniques, such as use of acids (e.g., piranha acid solution and/or nitric acid), or ultraviolet/ozonolysis and water.

In some embodiments, the support bonded to the modifier is formed by direct silanization that occurs in a single step. In some embodiments, the support bonded to the modifier is formed by direct silanization comprising treating an alumina support with n-propyltrimethoxysilane (C3-TMS) and/or 3-[Methoxy(Polyethyleneoxy)6-9]Propyltrimethoxysilane (PEG-TMS).

In some embodiments, the support bonded to the modifier is formed by multi-step silanization that occurs in two or more steps. In some embodiments, the support bonded to the modifier is formed by multi-step silanization comprising (1) modifying alumina using CPTMS having chlorine (-Cl) groups, and (2) attaching a Jeffamine material through an amine and -Cl alkylation reaction.

In some embodiments, the modifier comprises a trialkoxysilane-based compound further comprising an alkyl chain bonded to the Si atom, wherein the alkyl chain has a chain length of 4, 5, 6, 7, 8, 9, 10, 11, 12, 13, 14, 15, 16, 17, or 18 carbon atoms. In some embodiments, the modifier comprises a trimethoxysilane-based compound further comprising an alkyl chain bonded to the Si atom, wherein the alkyl chain has a chain length of 4, 5, 6, 7, 8, 9, 10, 11, 12, 13, 14, 15, 16, 17, or 18 carbon atoms.

In some embodiments, the modifier comprises heteroatoms such as, but not limited to, oxygen (O) or nitrogen (N). Exemplary O-containing trialkoxysilane materials include 3-[methoxy(polyethyleneoxy)(6-9)]propyltrimethoxysilane (PEG-TMS) with different repeat units. Exemplary amino (N)-containing trialkoxysilane materials include [3-(2-aminoethylamino)propyl]trimethoxysilane, or [3-(diethylamino)propyl]trimethoxysilane.

In some embodiments, the modifier comprises epoxy-functional trialkoxysilane materials. Exemplary materials include, but are not limited to, (3-glycidoxypropyl)trimethoxysilane, or [3-(2,3-epoxypropoxy)-propyl]-trimethoxysilane.

In some embodiments, the modifier comprises acrylate or methacrylate-functional trialkoxysilane materials. Exemplary materials include, but are not limited to (3-acrylamidopropyltrimethoxysilane), N-(3-acryloxy-2-hydroxypropyl)-3-aminopropyltriethoxysilane, or (3-methacrylamidopropyl)triethoxysilane.

In some embodiments, the first alkyl group is identical to the second alkyl group. In some embodiments, the first alkyl group is different than the second alkyl group. In some embodiments, the first alkyl group and the second alkyl group are each independently selected from the group consisting of methyl, ethyl, propyl, butyl, pentyl, and hexyl.

Generally, the support may include any suitable sorbent known in the art that facilitates the functionalized sorbent. In some embodiments, the support is any support described in the present disclosure. In some embodiments, the support includes a particle selected from the group consisting of solid particles, mesoporous particles, microporous particles, macroporous particles, and combinations thereof. In some embodiments, the support includes an inorganic support selected from the group consisting of oxides, alumina, silica, zirconia, clay, carbon powder, and combinations thereof.

In some embodiments, the sorbent is present in a powder form or a coating composite form.

Generally, the support may be any suitable size known in the art that facilitates the functionalized sorbent. In some embodiments, the support has any size described in the present disclosure. In some embodiments, the support has a D50 particle size of less than 50 $\mu$m. In some embodiments, the support has a D50 particle size of less than 20 $\mu$m. In some embodiments, the support has a D50 particle size of less than 10 $\mu$m.

Generally, the functionalization ligand may include any suitable functionalization ligand known in the art that facilitates the functionalized sorbent. In some embodiments, the functionalization ligand is any functionalization ligand described in the present disclosure. In some embodiments, the functionalization ligand is selected from the group

consisting of linear alkyl polyamines, triamines, tetraamines, tetraethylenepentamine (TEPA), pentaethylenehexamine (PEHA), branched polyamines, tris(3-aminopropyl)amine, polymeric amines, linear or branched polyethylenimine (PEI), linear or branched polypropylenimine (PPI), epoxide modified polyamines, oxygen-containing amines, amine-functionalized resins, amine-functionalized ion exchange resins, and combinations thereof.

In some embodiments, the polyamine includes only primary amines. In some embodiments, the polyamine includes only primary and secondary amines. In some embodiments, the polyamine includes primary, secondary, and tertiary amines.

In some embodiments, the polyamine includes three or more amine groups. In some embodiments, the polyamine includes four or more amine groups. In some embodiments, the polyamine includes five or more amine groups. In some embodiments, the polyamine includes six or more amine groups.

In some embodiments, the portion of Formula I to the right of the Si atom includes an alkyl group having a number of carbon atoms in a range of from about 3 to about 18.

In some embodiments, the portion of Formula I to the right of the Si atom includes an oxygen-containing group or a polyether group.

In some embodiments, the portion of Formula I to the right of the Si atom includes at least one halogen selected from the group consisting of F, Cl, Br and I.

In some embodiments, the modifier is formed according to direct silanization or multi-step silanization.

Generally, the binder material may include any suitable binder material known in the art that facilitates the functionalized sorbent. In some embodiments, the binder material is any binder material described in the present disclosure. In some embodiments, the binder material includes a material selected from the group consisting of polymers, copolymers, thermoset polymers, cross-linkable polymers, and combinations thereof. In some embodiments, the binder material includes a material selected from the group consisting of epoxies, acrylates, methacrylates, and combinations thereof.

In some embodiments, the functionalized sorbent is deposited on a substrate.

Generally, the substrate may include any suitable substrate known in the art that facilitates the functionalized sorbent. In some embodiments, the substrate is any substrate described in the present disclosure. In some embodiments, the substrate is selected from the group consisting of monolith substrates, structured substrates, heat exchangers, positive-temperature-coefficient heating elements, self-regulating heaters, substrates thermally coupled to a positive-temperature-coefficient heating element or a self-regulating heater, and combinations thereof. In some embodiments, the substrate includes a substrate surface selected from the group consisting of fin and tube heat exchangers, plate and tube heat exchangers, and combinations thereof.

In some embodiments, the functionalized sorbent is configured to adsorb one or more of $CO_2$ and $H_2O$. In some embodiments, the functionalized sorbent is configured to adsorb $CO_2$. In some embodiments, the functionalized sorbent is configured to adsorb $H_2O$. **In** some embodiments, the functionalized sorbent is configured to adsorb $CO_2$ and $H_2O$.

Described herein is a contactor including the functionalized sorbent. Generally, the contactor may include any suitable contactor known in the art that facilitates the functionalized sorbent. **In** some embodiments, the contactor is any contactor described in the present disclosure.

**In** some embodiments, the contactor includes two sets of thermally-coupled but fluidically-separated flow paths, wherein one set of the two sets of thermally-coupled but fluidically-separated flow paths includes the functionalized sorbent, an inlet for a $CO_2$-containing gaseous stream and an outlet for a $CO_2$-depleted gaseous steam produced during an adsorption mode of operation; wherein the other set of the two sets of thermally-coupled but fluidically-separated flow paths includes heating and cooling media, an inlet for the heating and cooling media to enter the contactor and an outlet for the heating and cooling media to exit the contactor. In some embodiments, the heating and cooling media are selected from the group consisting of heating and cooling oils, gaseous vapors, heating and cooling steams, and combinations thereof.

Sorbent system.

The exemplary embodiments described herein include a sorbent system. Generally, the sorbent system may be any suitable sorbent system known in the art that facilitates the functionalized sorbent described herein. In some embodiments, the sorbent system includes the functionalized sorbent and optionally a binder. In some embodiments, the sorbent system is disposed on a polymer film.

In some embodiments, the sorbent system is in a form of a coating formulation. The coating formulation may be in a form of a solution, an emulsion, a slurry (i.e. soluble binder, insoluble sorbent), or a combination thereof. When in the form of a solution, the binder is water-soluble. When in the form of an emulsion, the binder is not water-soluble. The coating formulation may include a binder and optionally at least one additive. In some embodiments, at least one additive is selected from the group consisting of silica particles, clay particles, alumina particles, and combinations thereof. In some embodiments, the binder includes at least one water-based binder selected from the group consisting of water-based

epoxies, water-based acrylic resins, water soluble polymers, and combinations thereof.

In some embodiments, the sorbent system includes at least one concentrator. The concentrator may be any suitable concentrator known in the art that facilitates the functionalized sorbent described herein. The concentrator may be a passive concentrator or an active concentrator.

In some embodiments, the sorbent system includes at least one component configured to drive fluid flow. The component configured to drive fluid flow may be any suitable component configured to drive fluid flow known in the art that facilitates the functionalized sorbent described herein. In some embodiments, the component configured to drive fluid flow is selected from the group consisting of pumps, fans, and combinations thereof.

In some embodiments, the sorbent system includes at least one component configured to alter temperature. The component configured to alter temperature may be any suitable component configured to alter temperature known in the art that facilitates the functionalized sorbent described herein. In some embodiments, the component configured to alter temperature is selected from the group consisting of heaters, coolers, and combinations thereof.

In some embodiments, the sorbent system includes at least one component configured to convey fluid. The component configured to convey fluid may be any suitable component configured to convey fluid known in the art that facilitates the functionalized sorbent described herein. In some embodiments, the component configured to convey fluid is selected from the group consisting of pipes, perforated pipes, plastic perforated pipes, polymeric perforated pipes, metal perforated pipes, composite perforated pipes, and combinations thereof.

In some embodiments, the sorbent system includes at least one contactor. In some embodiments, the sorbent system includes more than one contactor. In some embodiments, the sorbent system includes a contactor configured for an adsorption cycle and a contactor configured for a desorption cycle. The contactor may be any suitable contactor known in the art that facilitates the functionalized sorbent described herein. In some embodiments, the sorbent is integrated into at least one channel of the contactor. In some embodiments, the contactor is fabricated from the sorbent itself. In some embodiments, the contactor is coated with the sorbent system. In some embodiments, the contactor includes more than one sorbent coating, with at least one sorbent coating being the sorbent system.

In some embodiments, the sorbent system includes a frame. The frame may be any suitable frame known in the art that facilitates the functionalized sorbent described herein. The frame may be included in the contactor or between two contactors. The frame may be composed of one piece or composed of more than one piece. In some embodiments, the frame is an air frame. In some embodiments, the frame is in a configuration selected from the group consisting of polygonal configurations, rectangular configurations, square configurations, circular configurations, asymmetrical configurations, and combinations thereof. In some embodiments, the sorbent system is mounted on the frame.

$CO_2$ capture system.

Also described herein is a $CO_2$ capture system for use with the sorbent. Such $CO_2$ capture systems are known in the art, for example in International Publication No. PCT/US2024/051937, the contents of which are hereby incorporated by reference herein.

As will be described in detail hereinafter, various embodiments of a preferable $CO_2$ capture system for use with the sorbent are presented. The preferable $CO_2$ capture system includes at least one contactor for the extraction of $CO_2$ from a surrounding fluid, such as ambient air, using sorbents and thermally-enhanced recovery efforts. The disclosed system solves the problem of high $CO_2$ extraction costs by integrating a sorbent with a contactor and by utilizing an air concentrator. The high surface area sorbent-integrated contactor, low pressure drop across the contactor, and air concentrator are key contributors to the system performance. The sorbent may be any sorbent in accordance with the present disclosure. The contactor features a design that contains at least two fluidically-isolated, independent, massively parallel fluid domains: a) sorbent-integrated fluid domain that provides for flow of ambient air and $CO_2$ adsorption from the ambient air flow; b) a second fluid domain to promote desorption via transfer of sensible heat to the sorbent-integrated fluid domain; and c) an optional third fluid domain that can be sorbent integrated or used to promote desorption.

The $CO_2$ capture systems of the present disclosure can comprise the at least one contactor with the sorbent material. This system can utilize the sorbent material and the contactor at the appropriate partial pressure to absorb the $CO_2$ from an inlet gas or first fluid stream.

The use of alternative cycling of two contactors for continuous $CO_2$ removal where each contactor has massively parallel fluid domains results in low pressure drop, and the separation of the fluids avoids contamination of the $CO_2$ stream and offers indirect heat exchange. The contactor can be manufactured using additive technology, such as, for instance, binder-jet techniques, or some other means of manufacturing. The described system provides commercial advantages by providing the ability to operate in a wide range of low energy requirements. The technology can be deployed at locations with higher wind speeds, such as rooftops of commercial buildings, where state of the art technologies cannot be deployed. Additional market opportunities may include consumer $CO_2$, industrial $CO_2$ capture and desalination.

The various embodiments of the $CO_2$ capture system as described hereinabove dramatically improves the ability to extract $CO_2$ from an inlet gas, such as ambient air, utilizing less energy and thus at a lower costs. The use of a

concentrator combined with a low pressure drop across the contactor allows the $CO_2$ capture system to operate in a passive mode thus reducing energy requirements. The integration of a sorbent with a contactor and the transfer of sensible heat to the sorbent channel to assist with desorption, produces a $CO_2$ stream not contaminated with the fluid used to supply sensible heat. By way of example, the use of a contactor multi-furcating design enabling thermally enhanced recovery of $CO_2$ in the inlet gas, reduces the cost of operation of the overall system. The use of alternative cycling of at least two contactors for continuous $CO_2$ removal where each contactor includes the multi-furcating design, and more particularly includes massively parallel channels, results in low pressure drop and offers indirect heat exchange described hereinabove which aids with effective energy transfer in the $CO_2$ capture system. The various embodiments of the $CO_2$ capture system, and contactor design, described hereinabove therefore present a fuel-efficient, two-cycle system architecture that generates a $CO_2$ stream from the inlet gas stream.

Methods of Use.

Generally, the solid sorbent may be used according to any suitable purpose known in the art that facilitates the use of the solid sorbent described herein. In some embodiments, the solid sorbent is used in a sorbent system. In some embodiments, the solid sorbent is used in a carbon capture sorbent system. In some embodiments, the solid sorbent is used in a moisture sorbent system. In some embodiments, the solid sorbent is used in a carbon capture sorbent system in the presence of water. In some embodiments, the solid sorbent is used for capturing a gas. In some embodiments, the solid sorbent is used for post-combustion capturing of $CO_2$ and/or direct air capturing of $CO_2$.

In some embodiments, the method includes: (I) receiving a gas source including at least one gas at a solid sorbent; and (II) capturing an amount of the at least one gas with the solid sorbent.

Generally, the gas source may be any suitable gas source known in the art that facilitates the method described herein. In some embodiments, the gas source is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

Generally, the at least one gas may be any suitable gas known in the art that facilitates the method described herein. In some embodiments, the at least one gas is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

In some embodiments, the at least one gas is present in the source gas in an amount in a range of from about 0.001%(v/v) to about 100%(v/v). In some embodiments, the at least one gas is present in the source gas in an amount in a range of from about 0.001%(v/v) to about 40%(v/v). In some embodiments, the at least one gas is present in the source gas in an amount in a range of from about 0.001%(v/v) to about 15%(v/v). In some embodiments, the at least one gas is present in the source gas in an amount in a range of from about 0.001%(v/v) to about 10%(v/v). In some embodiments, the at least one gas is present in the source gas in an amount in a range of from about 0.001%(v/v) to about 5%(v/v). In some embodiments, the at least one gas is present in the source gas in an amount in a range of from about 0.001%(v/v) to about 1%(v/v). In some embodiments, the at least one gas is present in the source gas in an amount greater than 10%(v/v).

In some embodiments, the at least one gas is present in the source gas in an amount in a range of from about 100 ppmv to about 1000 ppmv. In some embodiments, the at least one gas is present in the source gas in an amount in a range of from about 200 ppmv to about 1000 ppmv. In some embodiments, the at least one gas is present in the source gas in an amount in a range of from about 300 ppmv to about 5000 ppmv. In some embodiments, the at least one gas is present in the source gas in an amount in a range of from about 200 ppmv to about 500 ppmv.

In some embodiments, the at least one gas does not include water vapor.

In some embodiments, the at least one gas includes water vapor. In some embodiments, the at least one gas includes water vapor in an amount in a range of from about 0.001%(v/v) to about 25%(v/v). In some embodiments, the at least one gas includes water vapor in an amount in a range of from about 0.01%(v/v) to about 20%(v/v). In some embodiments, the at least one gas includes water vapor in an amount in a range of from about 0.5%(v/v) to about 15%(v/v). In some embodiments, the at least one gas includes water vapor in an amount in a range of from about 0.5%(v/v) to about 4%(v/v). In some embodiments, the at least one gas includes water vapor in an amount in a range of from about 4%(v/v) to about 15%(v/v).

In some embodiments, the at least one gas is present in the source gas in an amount in a range of from about 0.001%(v/v) to about 10%(v/v) and is in the presence of water vapor. In some embodiments, the at least one gas is present in the source gas in an amount in a range of from about 0.001%(v/v) to about 5%(v/v) and is in the presence of water vapor. In some embodiments, the at least one gas is present in the source gas in an amount in a range of from about 0.001%(v/v) to about 1%(v/v) and is in the presence of water vapor. In some embodiments, the at least one gas is present in the source gas in an amount greater than about 10%(v/v) and is in the presence of water vapor. In some embodiments, the water vapor is present in an amount in a range of from about 0.001%(v/v) to about 25%(v/v). In some embodiments, the water vapor is present in an amount in a range of from about 0.01%(v/v) to about 20%(v/v). In some embodiments, the water vapor is

present in an amount in a range of from about 0.5%(v/v) to about 10%(v/v).

In some embodiments, capturing an amount of the at least one gas with the solid sorbent includes adsorbing an amount of the at least one gas with the solid sorbent. In some embodiments, capturing an amount of the at least one gas with the solid sorbent includes adsorbing an amount of the at least one gas with the solid sorbent in the presence of water vapor.

In some embodiments, the amount of the at least one gas captured with the solid sorbent is in a range of from about 1%(v/v) to about 100%(v/v) of the at least one gas present in the source gas. In some embodiments, the amount of the at least one gas captured with the solid sorbent is in a range of from about 10%(v/v) to about 90%(v/v) of the at least one gas present in the source gas. In some embodiments, the amount of the at least one gas captured with the solid sorbent is in a range of from about 20%(v/v) to about 80%(v/v) of the at least one gas present in the source gas. In some embodiments, the amount of the at least one gas captured with the solid sorbent is in a range of from about 30%(v/v) to about 70%(v/v) of the at least one gas present in the source gas. In some embodiments, the amount of the at least one gas captured with the solid sorbent is in a range of from about 40%(v/v) to about 60%(v/v) of the at least one gas present in the source gas.

In some embodiments, the amount of the at least one gas captured with the solid sorbent is in a range of from about 1%(v/v) to about 25%(v/v) of the at least one gas present in the source gas. In some embodiments, the amount of the at least one gas captured with the solid sorbent is in a range of from about 1%(v/v) to about 20%(v/v) of the at least one gas present in the source gas. In some embodiments, the amount of the at least one gas captured with the solid sorbent is in a range of from about 1%(v/v) to about 15%(v/v) of the at least one gas present in the source gas. In some embodiments, the amount of the at least one gas captured with the solid sorbent is in a range of from about 1%(v/v) to about 10%(v/v) of the at least one gas present in the source gas. In some embodiments, the amount of the at least one gas captured with the solid sorbent is in a range of from about 1%(v/v) to about 5%(v/v) of the at least one gas present in the source gas.

In some embodiments, the amount of the at least one gas captured with the solid sorbent is in a range of from about 80%(v/v) to about 100%(v/v) of the at least one gas present in the source gas. In some embodiments, the amount of the at least one gas captured with the solid sorbent is in a range of from about 85%(v/v) to about 100%(v/v) of the at least one gas present in the source gas. In some embodiments, the amount of the at least one gas captured with the solid sorbent is in a range of from about 90%(v/v) to about 100%(v/v) of the at least one gas present in the source gas. In some embodiments, the amount of the at least one gas captured with the solid sorbent is in a range of from about 95%(v/v) to about 100%(v/v) of the at least one gas present in the source gas.

In some embodiments, the source gas is modified to alter the amount of water vapor. In some embodiments, altering the amount of water vapor includes increasing the amount of water vapor. In some embodiments, altering the amount of water vapor includes decreasing the amount of water vapor. In some embodiments, increasing the amount of water vapor includes adding or injecting water vapor into the source gas. In some embodiments, decreasing the amount of water vapor includes removing water vapor from the source gas by evaporation, condensation, and/or pre-adsorption. In some embodiments, altering the amount of water vapor includes exhaust gas recirculation (EGR) and/or mixing.

In many embodiments, the solid sorbent, the source gas, the at least one gas, or a combination thereof are at a certain temperature. Each temperature may be altered to facilitate the method described herein. Each temperature may have a uniform temperature profile, a gradient temperature profile, a discrete temperature profile, or a combination thereof.

In some embodiments, the method includes an adsorption cycle. In some embodiments, the method includes a desorption cycle. In some embodiments, at least one of the solid sorbent, the source gas, the at least one gas, or a combination thereof are at a temperature in a range of from about -40 °C to about 150 °C during the gas adsorption cycle. In some embodiments, at least one of the solid sorbent, the source gas, the at least one gas, or a combination thereof are at a temperature in a range of from about 60 °C to about 250 °C during the gas desorption cycle. Each adsorption module or sub-module can have a uniform temperature profile, a gradient temperature profile or discrete temperature profiles. In some embodiments, the method includes altering pressure during the desorption cycle to facilitate the desorption. During the desorption step, vacuum is optionally applied to facilitate the process. In one embodiment, the pressure inside the sorbent-integrated channel 158 is 0.8 Bar to 1.2 Bar. In another embodiment, the pressure inside the sorbent-integrated channel 158 is 0.4 Bar to 0.8 Bar. In another embodiment, the pressure inside the sorbent-integrated channel 158 is 0.1 Bar to 0.4 Bar. In another embodiment, the pressure inside the sorbent-integrated channel 158 is less than 0.1 Bar.

In some embodiments, the method includes controlling a temperature. Temperature may be controlled for the solid sorbent, the source gas, the at least one gas, or a combination thereof.

The exemplary embodiments described herein include a method of collecting at least one gas from a gas source.

EXAMPLES

Without further elaboration, it is believed that one skilled in the art using the preceding description can utilize the present invention to its fullest extent. The following Examples are, therefore, to be construed as merely illustrative, and not limiting of the disclosure in any way whatsoever. The starting material for the following Examples may not have necessarily been prepared by a particular preparative run whose procedure is described in other Examples. It also is understood that

any numerical range recited herein includes all values from the lower value to the upper value. For example, if a range is stated as 10-50, it is intended that values such as 12-30, 20-40, or 30-50, etc., are expressly enumerated in this specification. These are only examples of what is specifically intended, and all possible combinations of numerical values between and including the lowest value and the highest value enumerated are to be considered to be expressly stated in this application.

Two sets of experiments were performed to illustrate applicability of the present disclosure. One set of experiment is to rejuvenate sorbent powders and other hetero-composites. The present disclosure is also applicable to other types of sorbent materials, sorbent composites in different form factors and shapes including but not limited to powders, films, gels, uniform composites, structured articles comprising different sorbents and composites, composites with uniform and hetero-compositions etc.

Example 1. General testing procedures.

Performance of $CO_2$ and $H_2O$ adsorption was studied using a gravimetric dynamic vapor sorption analyzer (DVS). In the experiments presented in this disclosure, the gas and vapor used are $CO_2$ and water, respectively. The DVS Vacuum analyzer is designed to accurately measure a sample's change in mass as it adsorbs precisely controlled concentrations of water and or gas molecules. The sample is placed in a sample pan hung from a microbalance (an empty pan is usually hung on the other side of the microbalance as a reference). The DVS Vacuum controls and measures sorbate entry and exit flows simultaneously while recording changes in sample mass. The main instrument, the microbalance (UltraBalance™) is housed in a precisely controlled temperature-controlled enclosure (referred to as an incubator). This ensures a highly stable instrument baseline and accurate vapor generation control to occur at the experimental temperature.

The gravimetric DVS method can accurately measure isotherms of pure $H_2O$ and pure $CO_2$. For wet $CO_2$ adsorption, a two-cycle sequential adsorption testing protocol is developed. At the beginning of each test, the sorbent material of interest is subjected to an activation (or regeneration) step at 120°C for 60 minutes under a vacuum of less than $10^{-5}$ mbar. The set partial pressure of water is introduced under vacuum without the interference of a carrier gas at given temperature. The sample's weight is measured directly and continuously using Surface Measurement Systems' Ultra precision microBalance with a resolution of 0.1 $\mu$g. All sorption measurements in this disclosure were done in a mass equilibrium mode where the mass equilibrium criterion is set as the change in mass per minute (dm/dt of <0.0035). When the water adsorption reaches equilibrium, $CO_2$ gas with a pre-set partial pressure target is introduced. The partial pressure of $CO_2$ can be adjusted to reflect application conditions, i.e. 400vppm for direct air capture (DAC) or 4.5v% for post combustion capture (PCC).

Performance of $CO_2$ and $H_2O$ adsorption can also be studied using home-made break through test rigs. The test rigs have a sample chamber that houses testing samples either in a powder form or a coating form, with separate and calibrated $CO_2$ and relative humidity (RH) sensors located at both the gas inlet before the sample chamber and gas outlet after the sample chamber. The test rigs can measure individual break through curves for $CO_2$ and $H_2O$ under either dry or wet $CO_2$ conditions with pre-set RH levels. Uptake can be calculated by integrating the break-through curve over time.

Dry $CO_2$ isotherms are measured at 25°C using the gravimetric DVS method to evaluate $CO_2$ uptake at different $CO_2$ partial pressures. Similarly, $H_2O$ isotherms are measured to evaluate $H_2O$ uptake at different relative humidity (RH) levels.

Adsorption performances are measured under a DAC-relevant co-adsorption condition (25°C, 50%RH and 400vppm $CO_2$) using the break through test rig. $CO_2$ desorption properties were studied by monitoring $CO_2$ desorption signals while the test bed temperature is increased stepwise. For each experiment, the sorbent is subjected to adsorption to full equilibrium under the DAC relevant condition, i.e. 25°C, 400vppm $CO_2$ and 50%RH.

$CO_2$ uptake or capacity is shown as adsorbed $CO_2$ in gram per gram of sorbent ($gCO_2$/gSorbent). Similarly, $H_2O$ uptake or capacity is expressed as gram of $H_2O$ adsorbed per gram of Sorbent ($gH_2O$/gSorbent). The $CO_2$ and $H_2O$ uptake can be generally considered as exponential growth over time, which can be expressed as $\frac{Q_{max}-Q_{(t)}}{Q_{max}} = e^{-kt}$ where $Q_{max}$ and $Q_{(t)}$ is equilibrium uptake and uptake at a given adsorption time of *t* (min), respectively, and *k* is the characteristics of the exponential growth with a unit of 1/min. Note that, mathematically, 1/k with a unit of mins equals the time required to reach 63% of $Q_{max}$. In this disclosure, *1/k* which is more intuitive than *k,* is used to compare kinetics or rate of $CO_2$ uptake, i.e. the lower the 1/k, the faster the $CO_2$ uptake kinetics.

Nitrogen (N) content in weight percentage (N(wt%)) is used to relatively quantify amine content. N(wt%) can be quantitively measured using Inductively Coupled Plasma (ICP) elemental analysis or together with carbon (C) content and hydrogen (H) content commonly known as CHN analysis.

Example 2. Rejuvenating sorbents.

Sorbent powder comprising covalently-bonded amines (GE351-SG2-39).

GE351-SG2-39 was synthesized according to Figure 11. First, in a 3-necked round bottom flask 4g of γ-$Al_2O_3$ (pre-activated thermally at 100 °C) was added. Particle sizes of γ-$Al_2O_3$ measured by Horiba light scattering technique are for 5.06/8.44/14.17um for D10/D50/D90, respectively. To the flask, 20 ml of toluene and 200 μl of water were added. After stirring once a homogeneous mixture was formed, a grafting agent, hereafter referred to as grafter, (p-chloromethyl) phenyltrimethoxysilane) (PCPT) (4g) was added dropwise to the slurry. The reaction mixture was heated to reflux and stirred it overnight at 90°C. After the reaction cooled down to room temperature, the excess toluene was removed. The slurry was transferred to a 50 ml centrifuge tube with fresh toluene. It was washed with fresh toluene for 3 times to remove any excess physisorbed PCPT. The residue was then kept in a vacuum oven at 90°C to obtain PCPT grafted γ-$Al_2O_3$. Next, spermine (4.04g, 0.02 mmol) was dissolved in toluene (50 ml) and PCPT grafted γ-$Al_2O_3$ (2g, 0.002 mmol PCPT) was added to it. The reaction mixture was stirred at 90°C for 72 hrs. After that, the reaction mixture was cooled down to room temperature and excess toluene was removed. The obtained residue was washed with methanol 3 times followed by drying under vacuum at 90°C to obtain GE351-SG2-39, which comprises covalently bonded spermine.

Adsorption performances of $CO_2$ and $H_2O$ measured at the DAC-relevant co-adsorption condition (25°C, 50% RH and 400vppm $CO_2$) for GE351-SG2-39 are summarized in Table 1, together with N(wt%) and description of chemical compositions.

Table 1. Exemplary sorbent materials and their adsorption performances of $CO_2$ and $H_2O$ measured at the DAC-relevant co-adsorption condition (25°C, 50%RH and 400vppm $CO_2$).

| Sorbent name | N (wt%) | Covalently bonded amine | Impregnated amines | Cross-linking agent | $CO_2$ uptake ($gCO_2$/gSorbent) | $H_2O$ uptake ($gH_2O$/gSorbent) |
|---|---|---|---|---|---|---|
| GE351-SG2-39 | 2.8% | Spermine | n/a | n/a | 0.0404 | 0.254 |
| GE409-A3169D | 10.49% | Spermine | PEHA | n/a | 0.1365 | 0.4631 |
| GE411-A3170B | 12.36% | Spermine | PEHA | Yes (1-pot) | 0.0867 | 0.4809 |
| GE417-A3176B | 11.05% | Spermine | PEHA | Yes (sequential) | 0.087 | 0.5766 |

Example 3. Treating sorbent powder with amine solutions (GE409-A3169D), corresponding to the embodiments of Figures 1, 2, 7, and 8.

To a 20 mL scintillation vial, 0.100 g of GE351-SG2-39 comprising PCPT grafted γ-$Al_2O_3$ having covalently bonded spermine (24.9% organics) was slurried in 5 mL methanol. Next, 67 wt % of pentaethylenehexamine (PEHA, 0.067 g) was added to the vial and stirred for 16 hours at room temperature. The methanol was removed via rotary evaporator and the material was dried in a vacuum oven for 8 hours at 90 °C to obtain 166.6 mg of GE409. To characterize the amount of amine impregnated in the porous support, TGA was used. The total organic mass loss was 44.6%, therefore; the impregnated amine mass loss totaled 19.7 %. Elemental analysis composition is 26.56 % C, 4.88% H and 10.49% N.

Shown in Figure 12 are TGA traces of γ-$Al_2O_3$, PCPT grafted γ-$Al_2O_3$, PCPT grafted γ-$Al_2O_3$ having covalently bonded spermine (GE351-SG2-39) and GE409-A3169D comprising GE351-SG2-39 with additional impregnated PEHA. Clearly, treating GE351-SG2-39 with PEHA further improves $CO_2$ adsorption performance (Table 1).

Example 4. Treating sorbent powder with amine solutions (GE411-A3170B), corresponding to the embodiments of Figures 1, 2, 7, and 8.

To a 20 mL scintillation vial, 0.100 g of GE351-SG-2-39 comprising PCPT grafted γ-$Al_2O_3$ having covalently bonded spermine (24.9% organics) was slurried in 5 mL methanol. Next, 67 wt % of pentaethylenehexamine (PEHA, 0.067 g) and 4 eq. of a cross-linking agent, e.g. 1,5-hexadiene diepoxide (0.0168 g) was added to the vial and stirred for 16 hours at room temperature. The methanol was removed via rotary evaporator and the material was dried in a vacuum oven for 8 hours at 90 °C to obtain 178 mg of GE411. To characterize the amount of amine impregnated and crosslinked in the porous support, TGA was used. The total organic mass loss was 51.0%, therefore; the impregnated amine mass loss totaled 26.1 %. Elemental analysis composition is 31.16 % C, 6.25% H and 12.36% N.

Shown in Figure 13 are TGA traces of γ-$Al_2O_3$, PCPT grafted γ-$Al_2O_3$, PCPT grafted γ-$Al_2O_3$ having covalently bonded spermine (GE351-SG2-39) and GE411-A3170B comprising GE351-SG2-39 with additional impregnated PEHA

and crosslinking agent (1,5-hexadiene diepoxide). Clearly, treating GE351-SG2-39 with PEHA further improves $CO_2$ adsorption performance (Table 1).

Example 5. Treating sorbent powder with amine solutions (GE417-A3176B), corresponding to the embodiments of Figures 1, 2, 7, and 8.

To a 20 mL scintillation vial, 0.100 g of GE351-SG-2-39 comprising PCPT grafted $\gamma$-$Al_2O_3$ having covalently bonded spermine (24.9% organics) was slurried in 5 mL methanol. Next, 4 eq. of 1,5-hexadiene diepoxide (0.0168 g) was added to the vial and stirred for one hour. Then, 67 wt % of pentaethylenehexamine (PEHA, 0.067 g) was added to the vial and the slurry was stirred for 16 hours at room temperature. The methanol was removed via rotary evaporator and the material was dried in a vacuum oven for 8 hours at 90 °C to obtain 183.8 mg of GE417. To characterize the amount of amine impregnated and crosslinked in the porous support, TGA was used. The total organic mass loss was 51.5%, therefore; the impregnated amine mass loss totaled 26.6 %. Elemental analysis composition is 30.04 % C, 5.84% H and 11.05% N.

Shown in Figure 14 are TGA traces of $\gamma$-$Al_2O_3$, PCPT grafted $\gamma$-$Al_2O_3$, PCPT grafted $\gamma$-$Al_2O_3$ having covalently bonded spermine (GE351-SG2-39) and GE417-A3167B comprising GE351-SG2-39 with additional impregnated PEHA and crosslinking agent (1,5-hexadiene diepoxide). The difference between GE409-A3170B and GE417-A3167B lies in how and when the crosslinking agent (1,5-hexadiene diepoxide) was added. For GE409-A3170B, the crosslinking agent was added together with the PEHA amine, while for GE417-A3167B, the crosslinking agent was added and stirred for one hour before the PEHA amine was added. Clearly, both ways of treating GE351-SG2-39 using PEHA and crosslinking agent lead to increased N(wt%) as well as $CO_2$ adsorption performance.

Example 6. Extracting amines from a composite coating comprising a thermoset binder, corresponding to the embodiments of Figures 1, 3, 4, 9, and 10.

In this example, spermine modified by epoxides was used as an example. The general approach of modifying amines such as spermine using epoxides was disclosed in U.S. Patent Application No. 18/606,176, which is incorporated by reference herein.

According to the general method, a 20 mL scintillation vial was charged with 1 eq. of amine in 17 wt% and methanol. Then, 0.01-4 eq. of functionalized oxirane (epoxide) was added to the methanolic solution. The solution was stirred at room temperature overnight. The solvent was removed via rotary evaporator after at least 12 hours. The amine was dried in an 80 °C vacuum oven for 4 hours. An NMR sample was prepared in deuterated methanol (CD3OD) to determine the ratio of functionalization. For instance, 1 eq. of spermine (2 mmol, 0.405 g) was added to a 20 mL scintillation vial and dissolved in 3 mL methanol. Then, 1 eq. of 1,2-epoxybutane (2 mmol, 174 $\mu$L) was added and the solution was stirred at room temperature for 18 hrs. The methanol was removed via rotary evaporator to produce 0.27 1,2-epoxybutane:spermine in quantitative yield.

A general method for analyzing oxygen to amine (O/N) ratio using NMR was also disclosed in U.S. Patent Application No. 18/606,176, which is incorporated by reference herein.

In general, the functionalized amines were dissolved in 600 $\mu$L of $CD_3OD$ and the oxygen to nitrogen ratio was determined via 1H NMR based on the parent amine. In the case of the NMR in Figure 15, the peak at 1.66 ppm was set to 4 based on the protons highlighted by (C). The amount of functionalization can be determined by the $CH_3$ peak at $\delta$ 0.96 ppm (E) or the hydrogen attached to the beta ($\beta$)-alcohol at $\delta$ 3.58 ppm (A).

$$ratio\ of\ epoxide\ functionalization\ (O) = \frac{integration\ of\ CH_3\ peak}{theoretical\ integration} = \frac{3.24}{3} = 1.08$$

$$ratio\ of\ epoxide\ functionalization\ (O) = \frac{integration\ of\ hydrogen\ (\beta\ alcohol) peak}{theoretical\ integration} = \frac{1.06}{1} = 1.06$$

$$ratio\ of \frac{O}{N} = \frac{ratio\ of\ epoxide\ functionalization\ (O)}{number\ of\ amines\ (N)} = \frac{1.08}{4}\ or \frac{1.06}{4} = 0.27(\frac{O}{N})$$

Step 1. Preparing a composite film.

Westcoat-11, a two-part epoxy, is used as a binder example to illustrate the present disclosure. Part A is Oxirane, 2,2'-[(1-methylethylidene)bis(4,1-phenyleneoxymethylene)]bis-homopolymer with a CAS number of 25085-99-8, part B is a mixture of tetraethylenepentamine with a CAS number of 112-57-2 and propylene glycol diamine, 2amino-, diether with propylene with a CAS number of 9046-10-0. 0.25 g of spermine modified by 1,2-epoxybutane was dissolved in 1.5 g of

water. To this solution, 0.25 g of γ-$Al_2O_3$ was added, and the mixture was stirred at room temperature for 2 hours. Particle sizes of γ-$Al_2O_3$ measured by Horiba light scattering technique are for 5.06/8.44/14.17um for D10/D50/D90, respectively. To this mixture, 144 mg of westcoat-11-part A was mixed with 72 mg of westcoat-11-part B was added directly. The slurry was sonicated for 5 min before drop casting it on 2" × 2" aluminum coupons to produce a sorbent composite film (sample ID: GE455-MCF286). The film was cured at room temperature for 24 hours followed by drying in the oven at 90°C for 1 hour. The composite film has two amine sources (1) from the starting material of spermine modified by butane epoxide and (2) part-B of westcoat-11.

Step 2. Washing the composite film with $H_2O$.

The sample (GE455_F01-MCF286) was sprayed with water first, before submerging it into 30 mL of DI water for an hour. The pH of the DI water was measured around 12 after the first wash, indicating that the amines present in the original coating are at least partially being extracted. The film was submerged again with fresh 30 mL of DI water for 15 min. No change in the pH was recorded during the second wash, indicating that most of leachable amines if not all have been extracted. The film was then removed from DI water, air-dried, then further dried in an oven at 90 °C for 1 hour. The washed film sample has a sample ID of GE455-MCF286W.

Adsorption performance.

Adsorption performances of $CO_2$ and $H_2O$ measured at the DAC-relevant co-adsorption condition (25C, 50%RH and 400vppm $CO_2$) for both samples are summarized in Table 2. As one can see from Table 2, washing with $H_2O$ can at least partially extract amines present in the composite films, leading to a reduced amine content and a subsequently reduced $CO_2$ capacity.

Table 2. Adsorption performances of $CO_2$ and $H_2O$ measured at the DAC-relevant co-adsorption condition (25°C, 50%RH and 400vppm $CO_2$) for a composite sample as made and after washing with $H_2O$.

| Samples | State | $CO_2$ capacity ($gCO_2$/gSorbent) | $H_2O$ uptake ($gH_2O$/gSorbent) |
|---|---|---|---|
| GE455-MCF286 | Fresh as made | 0.096 | 0.273 |
| GE455-MCF286W | Washed with $H_2O$ | 0.069 | 0.440 |

Example 7. Examples of making or rejuvenating composite coatings comprising a thermoset binder, corresponding to the embodiments of Figures 1, 3, 4, 9, and 10.

Step 1. Preparing a composite film.

288 mg of Westcoat EC-11 Part A and 144 mg of Westcoat EC-11 Part B were added to 2 g of water and mixed. 3 g of alumina were added to the solution and the slurry was vortexed then sonicated for 5min. The slurry was drop casted on clean 2" × 2" aluminum coupons (MCF304). The coupon was air dried at RT for 1 day to cure and then dried in the oven at 90°C for 1 hour.

Step 2. Amine impregnation.

0.3 g of PEHA was dissolved in water and drop casted on top of MCF304, the sample was airdried overnight then dried in the oven at 90°C for 1 hour. The mass of the loaded film (MCF304L) increased by 0.15 g. This increase indicates that the alumina film was loaded with PEHA with a weight ratio of alumina to PEHA equivalent to 1:0.4.

Adsorption performance.

Adsorption performances of $CO_2$ and $H_2O$ measured at the DAC-relevant co-adsorption condition (25C, 50%RH and 400vppm $CO_2$) for both samples are summarized in Table 3. As one can see from Table 3, treating the sample in the amine-containing bath can increase the amine content in the film, subsequently leading to an increased $CO_2$ capacity.

Table 3. Adsorption performances of $CO_2$ and $H_2O$ measured at the DAC-relevant co-adsorption condition (25°C, 50%RH and 400vppm $CO_2$) for a composite sample as made and after treatment in an amine-containing bath.

| Samples | State | $CO_2$ capacity ($gCO_2$/gSorbent) | $H_2O$ uptake ($gH_2O$/gSorbent) |
|---|---|---|---|
| MCF304 | Fresh as made | 0.028 | 0.305 |
| MCF304L | Treated in amine-containing bath | 0.076 | 0.3132 |

Example 8. Sorbent composite coatings comprising different sorbent materials.

A sorbent composite coating may include one type of sorbent material. As described in more detail herein, the sorbent material generally includes materials capable of binding certain fluids, such as carbon dioxide ($CO_2$), water ($H_2O$), oxygen ($O_2$), or other gas molecules that may be present in air or form as result of a decomposition reaction (e.g., combustion). For example, the sorbent materials may include metal organic frameworks (MOFs) and/or covalent-organic frameworks (COFs). In some embodiments, the sorbent materials may include polymeric resins, silicas, zeolites, and the other materials capable of capturing fluids as discussed herein. Exemplary sorbent materials further include but are not limited to amine functionalized porous inorganic supports such as alumina and silica, amine functionalized mesoporous polymer supports, amine functionalized MOFs, amine functionalized COFs, amine functionalized polymer resins, amine functionalized ion exchange resins, and amine functionalized aerogels.

A sorbent composite coating may instead include at least two different types of sorbent materials. Suitable sorbent materials may include MOFs, COFs, polymeric resins, silicas, zeolites, amine functionalized mesoporous inorganic supports, such as alumina and silica, amine functionalized mesoporous polymer supports, amine functionalized MOFs, amine functionalized COFs and amine functionalized polymer resins etc.

The sorbent article capable of adsorbing $CO_2$ is presented as a contactor in the flow path of $CO_2$-containing flow path or air. The sorbent articles can be in any form including but not limited to sorbent powders, composites mixed with at least one binder material as a film or coating, packed bed, floating bed and columns, etc. In one embodiment, the amine functionalized sorbent is presented as a composite film or coating (hereafter referred to as composite) comprising an amine bearing moiety and at least one binder. In another embodiment, the amine functionalized sorbent is presented as a composite comprising an amine bearing moiety and at least one polymeric binder. In another embodiment, the amine functionalized sorbent presented as a composite comprises at least one thermoset polymeric binder where the thermoset polymeric binder is cured by an amine-containing curing agent. In another embodiment, the amine functionalized sorbent presented as a composite comprises at least one thermoset polymeric binder where the thermoset polymeric binder is cured by an amine-containing curing agent and additional amine moieties that are not chemically bonded to the binder. In another embodiment, the amine functionalized sorbent presented as a composite comprises at least one thermoset epoxy-based binder wherein the epoxy binder is a two-part epoxy comprising an epoxy part and an amine-based curing agent. In another embodiment, the amine functionalized sorbent is presented as a composite comprising an amine bearing moiety and at least one polymeric binder and at least one additive including but not limited to clay particles, silica particles, alumina particles etc. In another embodiment, the amine functionalized sorbent is presented as a composite prepared using an organic solvent including but not limited to xylene, p-xylene, o-xylene, ketones, ethanol, isopropyl alcohol etc. In another embodiment, the amine functionalized sorbent is presented as a composite prepared using water as the solvent.

Additional substrates can be present. For example, the sorbent article can be coated as a composite coating comprising a binder material on a flat substrate, structured substrate or monolith substrate or support. Substrates can also have additional functionalities such as a heating plate, heat exchange or heat conductor etc. In one embodiment, the sorbent composite is presented as a coating on a monolith substrate made of ceramic materials including but not limited to silica and alumina or metal materials including aluminum, copper or stainless steels or other alloys, or polymeric materials. In one embodiment, the sorbent composite is presented as a coating on a heating substrate whose temperature can be adjusted by applying an electrical voltage or electrical current. Examples of heating substrates include a positive-temperature-coefficient heating element (PTC heating element) or self-regulating heater etc. In another embodiment, the sorbent composite is presented as a coating on a heat exchanger comprising two sets of thermally-coupled but fluidically-separated flow paths. One set of the two sets of thermally-coupled but fluidically-separated flow paths comprises the sorbent composite, an inlet for $CO_2$-containing gaseous stream and an outlet for $CO_2$ depleted gaseous steam during adsorption mode of operation; the other set of the two sets of thermally-coupled but fluidically-separated flow paths comprises heating and cooling media such as heating/cooling oils, heating and cooling gas vapors, or heating and cooling steams, an inlet for the heating and cooling media into the heat exchanger and an outlet for the heating and cooling media exiting the heat exchanger.

Summary.

Described herein are solid sorbents including amines and a porous support. The solid sorbents exhibit high

adsorption capacities for carbon dioxide. The solid sorbents exhibit desirable hydrothermal and cycling stability.

Definitions.

As used herein, references to "example embodiment" or "one embodiment" or "some embodiments" of the present disclosure are not intended to be interpreted as excluding the existence of additional embodiments that also incorporate the recited features.

When introducing elements of various embodiments disclosed herein, the articles "a," "an," "the," and "said" are intended to mean that there are one or more of the elements. The terms "comprising," "including," and "having" are intended to be inclusive and mean that there may be additional elements other than the listed elements.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

As used herein, the term "alkyl", used either alone or in compound words such as "haloalkyl" includes functional groups including carbon chains. Alkyl groups may include aliphatic carbon chains, aryl carbon chains, or a combination thereof. An alkyl defined by a number of carbon atoms, e.g., $C_6$ alkyl, is understood to have that many carbon atoms but is not otherwise limited.

As used herein, "amine-containing unit" means a functional group including an amine group, such as a primary amine, secondary amine, tertiary amine, cyclic amine, or combination thereof.

As used herein, "OH-containing unit" means a functional group including a hydroxy (-OH) group. The -OH group may be a primary -OH group in which the -OH group is bound to a primary carbon atom to form a primary alcohol, a secondary - OH group in which the -OH group is bound to a secondary carbon atom to form a secondary alcohol, or a tertiary -OH group in which the -OH group is bound to a tertiary carbon atom to form a tertiary alcohol.

As used herein, the term "halogen" or "halide" either alone or in compound words such as "haloalkyl", includes fluorine, chlorine, bromine or iodine. Further, when used in compound words such as "haloalkyl", said alkyl may be partially or fully substituted with halogen atoms which may be the same or different. Examples of "haloalkyl" include $CF_3$, $ClCH_2$, $CF_3CH_2$, and $CF_3CCl_2$. The term "haloalkoxy", and the like, are defined analogously to the term "haloalkyl". Examples of "haloalkoxy" include $CF_3O$, $CCl_3CH_2O$, $CF_2HCH_2CH_2O$, and $CF_3CH_2O$.

As used herein, the term "polyamine" refers to chemical compounds having at least two amine groups. Polyamines may therefore include diamines, triamines, tetra-amines, penta-amines, hexa-amines, and combinations thereof.

$^1H$ NMR spectra are reported in ppm downfield from tetramethylsilane; "s" means singlet, "d" means doublet, "dd" means doublet of doublets, "ddd" means doublet of doublet of doublets, "t" means triplet, "m" means multiplet, and "br s" means broad singlet.

As used herein, the term "fluid" includes any medium or material that flows, including, but not limited to, air, gas, liquid, and steam.

As used herein, the term "D50 particle size" refers to a median particle size. In other words, the D50 is the size that splits the particle size distribution with half above and half below this diameter. Exemplary methods of measuring particle sizes include dynamic light scattering, optical microscope, scanning electron microscope, sedimentation, etc. A laser diffraction particle size analyzer (Horiba LA-960) was used to determine particle sizes in the present disclosure.

Although specific features of various embodiments of the invention may be shown in some drawings and not in others, this is for convenience only. In accordance with the principles of the invention, any feature of a drawing may be referenced and/or claimed in combination with any feature of any other drawing.

While the invention has been described in terms of various specific embodiments, those skilled in the art will recognize that the invention can be practiced with modification within the spirit and scope of the claims.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Exemplary Embodiments.

The individual aspects of the present disclosure may be combined in any combination or permutation. Select exemplary embodiments are set forth below in clauses. These embodiments are non-limiting.

Further aspects of the invention are provided by the subject matter of the following clauses. These clauses may be combined in any permutation or combination, including between embodiments.

1. A method of making or rejuvenating an absorptive article comprising:

    (a) providing a starting article comprising a first amine with a first amine content,

    (b) providing a second amine,

    (c) bringing the starting article comprising a first amine in contact with the second amine, and

    (d) obtaining a treated article having a second amine content, wherein the second amine content is higher than the first amine content.

2. The method of the preceding clause, wherein the starting article comprises a sorbent powder functionalized with the first amine, wherein the sorbent powder is capable of absorbing $CO_2$, $H_2O$ or a combination thereof.

3. The method of the preceding clause, wherein the sorbent powder comprises a MOF, an amine-functionalized MOF, an amine functionalized porous support, an amine functionalized resin, an amine functionalized ion exchange resin, or a combination thereof.

4. The method of any preceding clause, wherein the starting article comprises a support, wherein the first amine is at least partially covalently bonded to at least a portion of the support in the starting article.

5. The method of any preceding clause, wherein the starting article comprises a support, wherein the first amine is not covalently bonded to at least a portion of the support in the starting article.

6. The method of any preceding clause, wherein the starting article comprises a support, wherein the support is a porous support comprising a porous silica, a porous alumina, a porous clay, a porous polymer, a porous carbon powder, or a combination thereof.

7. The method of any preceding clause, wherein the second amine is present in a gas phase or a vapor phase optionally comprising a carrier gas optionally comprising air, $N_2$, dry air, steam, or a combination thereof.

8. The method of any preceding clause, wherein the second amine has at least one more amine group per unit than the first amine.

9. The method of any preceding clause, wherein the second amine is provided in a liquid phase.

10. The method of any preceding clause, wherein the second amine is provided as a solution comprising a solute dissolved in a solvent.

11. The method of the preceding clause, wherein the solvent comprises $H_2O$, an alcohol-containing solvent, a ketone-containing solvent, an ether-containing solvent, an aromatic containing solvent, or a combination thereof.

12. The method of any preceding clause, wherein the first amine and the second amine each comprise 2 or more amine groups per unit.

13. The method of any preceding clause, wherein the 2 or more amine groups per unit comprise only primary amine groups.

14. The method of any preceding clause, wherein the 2 or more amine groups per unit comprise primary amine groups and secondary amine groups.

15. The method of any preceding clause, wherein the 2 or more amine groups per unit comprise primary amine groups, secondary amine groups, and tertiary amine groups.

16. The method of any preceding clause, wherein the first amine is the same as the second amine.

17. The method of any preceding clause, wherein the starting article comprises a composite capable of absorbing $CO_2$, $H_2O$, or a combination thereof.

18. The method of the preceding clause, wherein the composite comprises a binder selected from the group consisting of a polymer, a copolymer, a mixture of 2 or more polymers, a thermoset material, a cross-linkable material, and combinations thereof.

19. The method of any preceding clause, wherein at least a portion of the first amine is covalently bonded to the binder.

20. The method of any preceding clause, wherein the second amine is provided as a composite form comprising a binder that is the same or different from the binder provided in the starting article.

21. The method of any preceding clause, wherein the starting article is present in the form of a contactor, wherein the contactor comprises a substrate surface onto which the composite is applied.

22. The method of the preceding clause, wherein the contactor comprises a monolith substrate, a structured substrate, a heat exchanger, or a combination thereof.

23. The method of any preceding clause, wherein the substrate surface is a positive-temperature-coefficient heating element or a self-regulating heater, or wherein the substrate surface is a substrate thermally coupled a positive-temperature-coefficient heating element or a self-regulating heater.

24. The method of any preceding clause, wherein the contactor comprises a fin and tube heat exchanger, a plate and tube heat exchanger, or a combination thereof.

25. The method of any preceding clause, wherein the contactor comprises two sets of thermally-coupled but fluidically-separated flow paths, wherein one set of the two sets of thermally-coupled but fluidically-separated flow paths comprises a sorbent composite, an inlet for a $CO_2$-containing gaseous stream, and an outlet for a $CO_2$-depleted gaseous stream during an adsorption mode of operation, and wherein the other set of the two sets of thermally-coupled but fluidically-separated flow paths comprises heating and cooling media optionally comprising heating and cooling oils, gaseous vapors, or heating and cooling steams, an inlet for the heating and cooling media into the contactor, and an outlet for the heating and cooling media exiting the contactor.

## Claims

**1.** A method of making or rejuvenating an absorptive article comprising:

(a) providing a starting article comprising a first amine with a first amine content,
(b) providing a second amine,
(c) bringing the starting article comprising a first amine in contact with the second amine, and
(d) obtaining a treated article having a second amine content, wherein the second amine content is higher than the first amine content.

**2.** The method of claim 1, wherein the starting article comprises a sorbent powder functionalized with the first amine, wherein the sorbent powder is capable of absorbing $CO_2$, $H_2O$ or a combination thereof.

**3.** The method of claim 2, wherein the sorbent powder comprises a MOF, an amine-functionalized MOF, an amine functionalized porous support, an amine functionalized resin, an amine functionalized ion exchange resin, or a combination thereof.

**4.** The method of claim 1, wherein the starting article comprises a support, wherein the first amine is at least partially covalently bonded to at least a portion of the support in the starting article.

**5.** The method of claim 1, wherein the starting article comprises a support, wherein the first amine is not covalently bonded to at least a portion of the support in the starting article.

**6.** The method of claim 1, wherein the starting article comprises a support, wherein the support is a porous support comprising a porous silica, a porous alumina, a porous clay, a porous polymer, a porous carbon powder, or a combination thereof.

**7.** The method of claim 1, wherein the second amine is present in a gas phase or a vapor phase optionally comprising a carrier gas optionally comprising air, $N_2$, dry air, steam, or a combination thereof.

**8.** The method of claim 1, wherein the second amine has at least one more amine group per unit than the first amine.

**9.** The method of claim 1, wherein the second amine is provided in a liquid phase.

**10.** The method of claim 1, wherein the second amine is provided as a solution comprising a solute dissolved in a solvent.

**11.** The method of claim 10, wherein the solvent comprises $H_2O$, an alcohol-containing solvent, a ketone-containing solvent, an ether-containing solvent, an aromatic containing solvent, or a combination thereof.

**12.** The method of claim 1, wherein the first amine and the second amine each comprise 2 or more amine groups per unit.

**13.** The method of claim 12, wherein the 2 or more amine groups per unit comprise only primary amine groups, or wherein the 2 or more amine groups per unit comprise primary amine groups and secondary amine groups, or wherein the 2 or more amine groups per unit comprise primary amine groups, secondary amine groups, and tertiary amine groups.

**14.** The method of claim 1, wherein the first amine is the same as the second amine.

**15.** The method of claim 1, wherein the starting article comprises a composite capable of absorbing $CO_2$, $H_2O$, or a combination thereof.

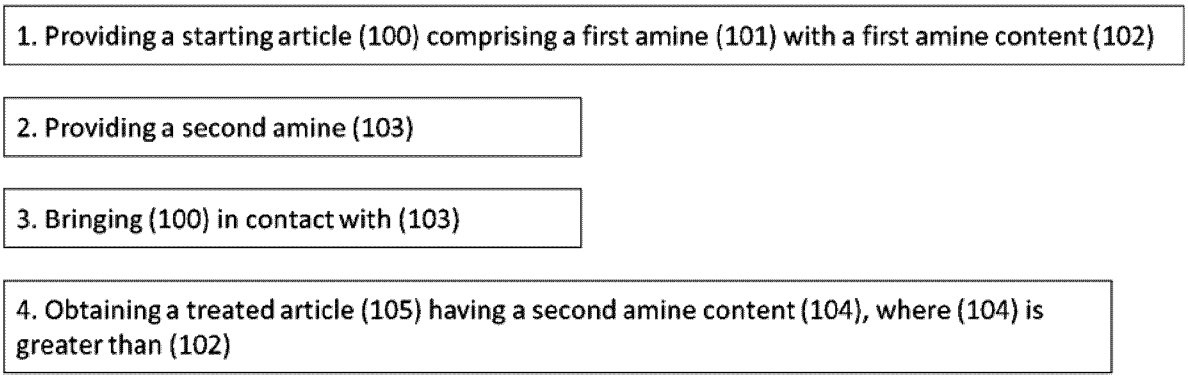
1. Providing a starting article (100) comprising a first amine (101) with a first amine content (102)
2. Providing a second amine (103)
3. Bringing (100) in contact with (103)
4. Obtaining a treated article (105) having a second amine content (104), where (104) is greater than (102)

FIG. 1

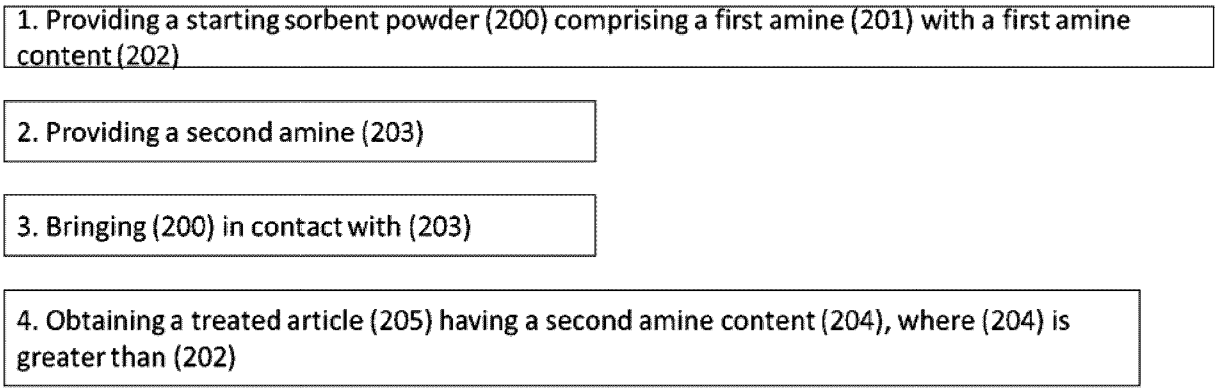
1. Providing a starting sorbent powder (200) comprising a first amine (201) with a first amine content (202)
2. Providing a second amine (203)
3. Bringing (200) in contact with (203)
4. Obtaining a treated article (205) having a second amine content (204), where (204) is greater than (202)

FIG. 2

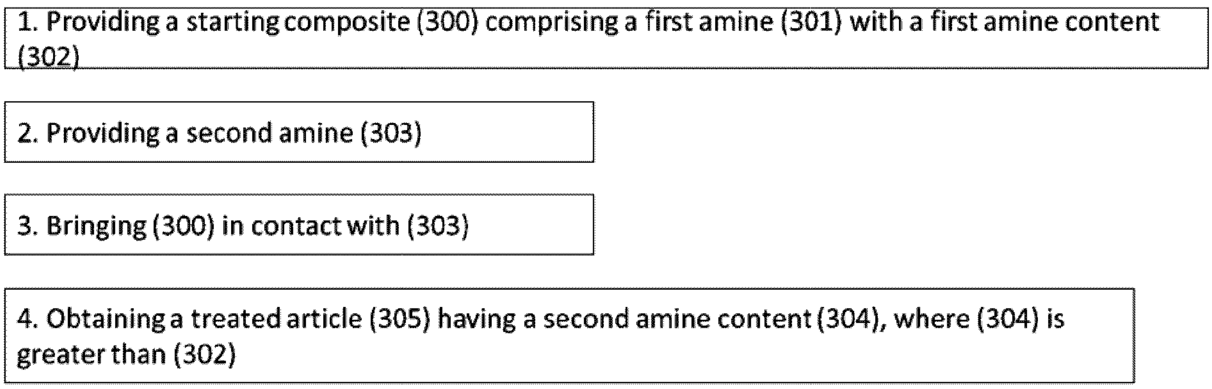
1. Providing a starting composite (300) comprising a first amine (301) with a first amine content (302)
2. Providing a second amine (303)
3. Bringing (300) in contact with (303)
4. Obtaining a treated article (305) having a second amine content (304), where (304) is greater than (302)

FIG. 3

1. Providing a starting composite (400) comprising a first amine (401) with a first amine content (402)

2. Providing a second amine (403) in solution (406) having a solvent (407)

3. Bringing (400) in contact with (403) in solution (406) having a solvent (407)

4. Obtaining a treated article (405) having a second amine content (404), where (404) is greater than (402)

FIG. 4

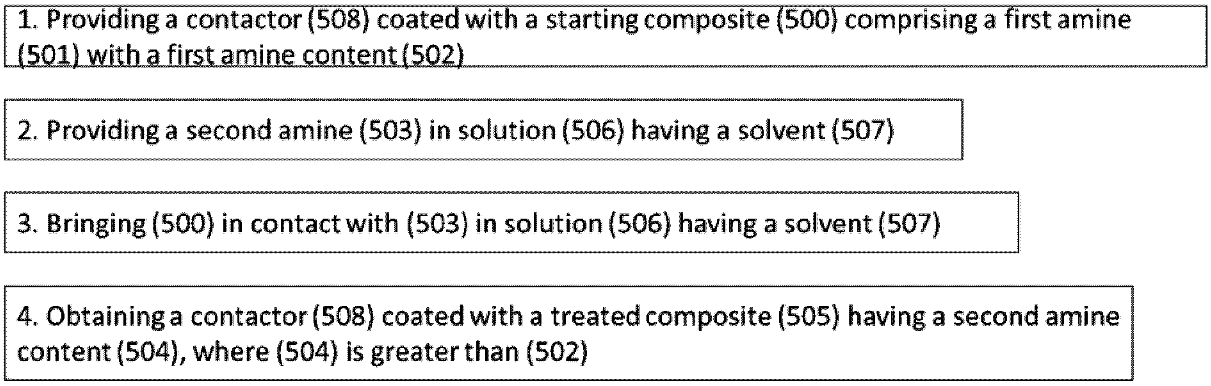
1. Providing a contactor (508) coated with a starting composite (500) comprising a first amine (501) with a first amine content (502)
2. Providing a second amine (503) in solution (506) having a solvent (507)
3. Bringing (500) in contact with (503) in solution (506) having a solvent (507)
4. Obtaining a contactor (508) coated with a treated composite (505) having a second amine content (504), where (504) is greater than (502)

FIG. 5

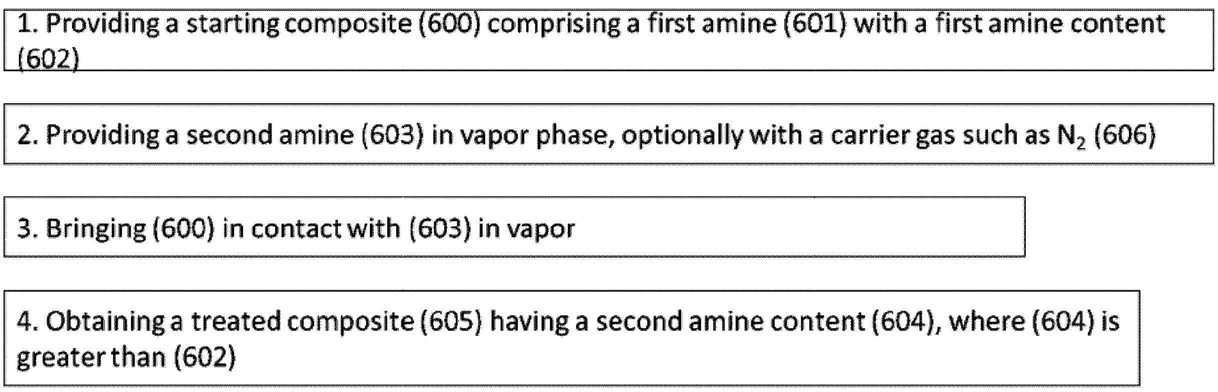
1. Providing a starting composite (600) comprising a first amine (601) with a first amine content (602)
2. Providing a second amine (603) in vapor phase, optionally with a carrier gas such as $N_2$ (606)
3. Bringing (600) in contact with (603) in vapor
4. Obtaining a treated composite (605) having a second amine content (604), where (604) is greater than (602)

FIG. 6

1. Providing a starting sorbent powder (700) comprising a first amine (701) with a first amine content (702)

2. Providing a second amine (703) in solution (706) having a solvent (707)

3. Bringing (700) in contact with (703) in solution (706) having a solvent (707)

4. Obtaining a treated sorbent powder (705) having a second amine content (704), where (704) is greater than (702)

FIG. 7

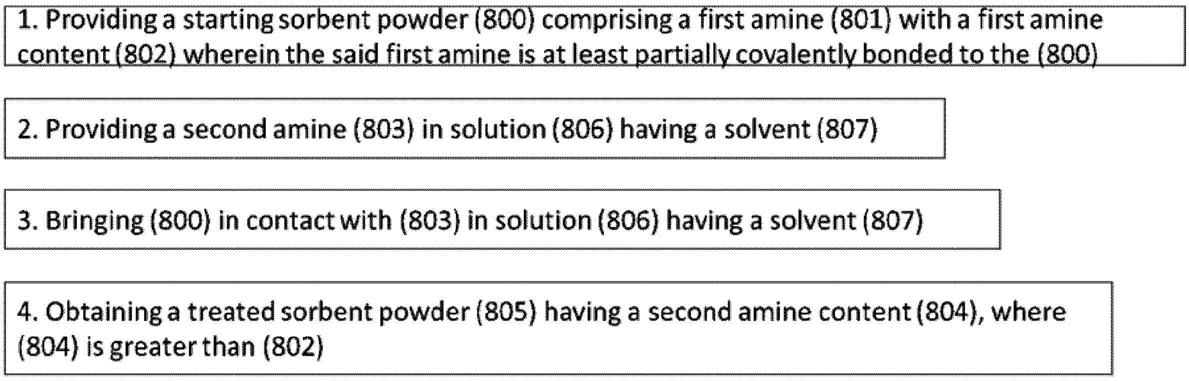
1. Providing a starting sorbent powder (800) comprising a first amine (801) with a first amine content (802) wherein the said first amine is at least partially covalently bonded to the (800)
2. Providing a second amine (803) in solution (806) having a solvent (807)
3. Bringing (800) in contact with (803) in solution (806) having a solvent (807)
4. Obtaining a treated sorbent powder (805) having a second amine content (804), where (804) is greater than (802)

FIG. 8

1. Providing a starting composite(900) comprising a first amine (901) with a first amine content (902) wherein the said first amine is at least partially covalently bonded to the (900)

2. Providing a second amine (903) in a solution (906) having a solvent (907)

3. Bringing (900) in contact with (903) in solution (906) having a solvent (907)

4. Obtaining a treated composite (905) having a second amine content (904), where (904) is greater than (902)

FIG. 9

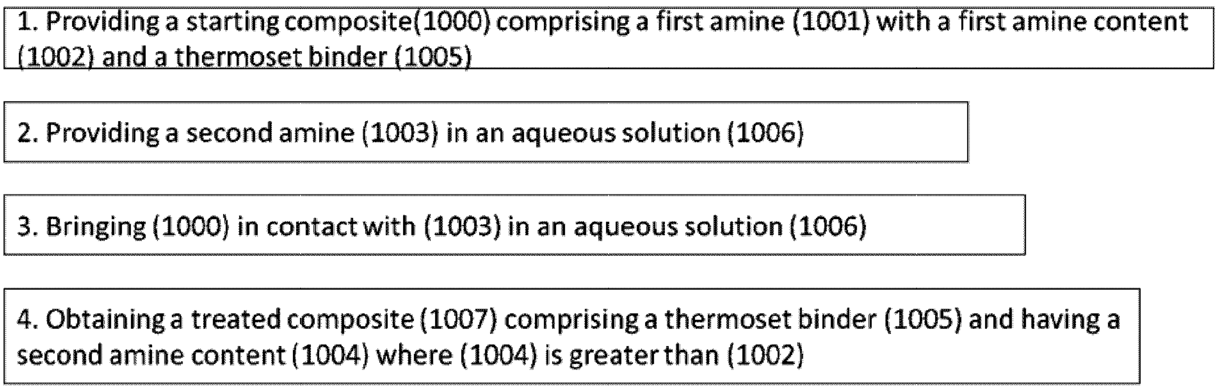
1. Providing a starting composite(1000) comprising a first amine (1001) with a first amine content (1002) and a thermoset binder (1005)
2. Providing a second amine (1003) in an aqueous solution (1006)
3. Bringing (1000) in contact with (1003) in an aqueous solution (1006)
4. Obtaining a treated composite (1007) comprising a thermoset binder (1005) and having a second amine content (1004) where (1004) is greater than (1002)

FIG. 10

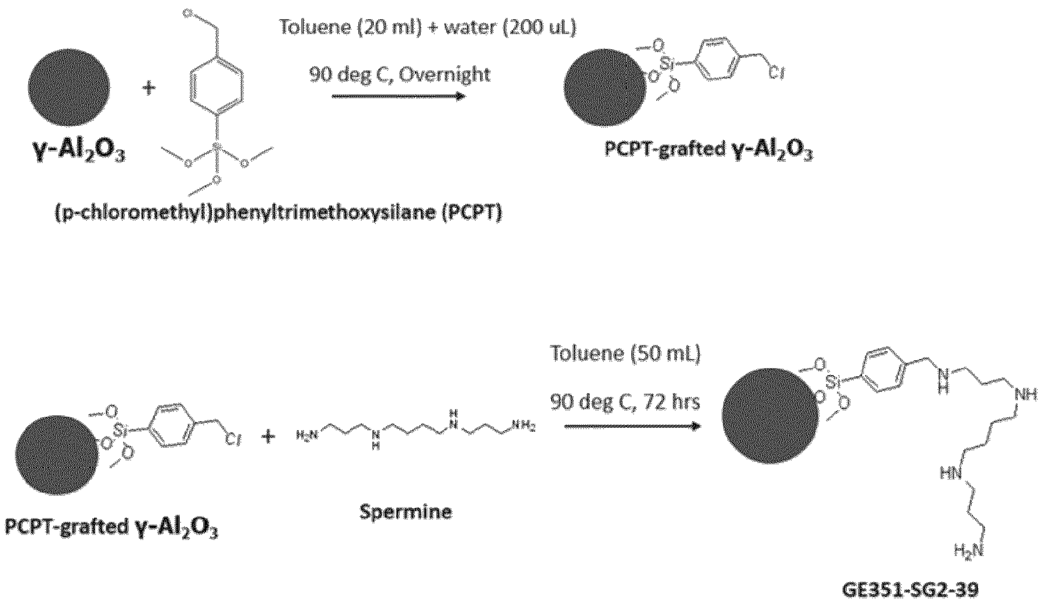
Toluene (20 ml) + water (200 uL)
90 deg C, Overnight
γ-Al$_2$O$_3$
(p-chloromethyl)phenyltrimethoxysilane (PCPT)
PCPT-grafted γ-Al$_2$O$_3$
Toluene (50 mL)
90 deg C, 72 hrs
PCPT-grafted γ-Al$_2$O$_3$
Spermine
GE351-SG2-39

FIG. 11

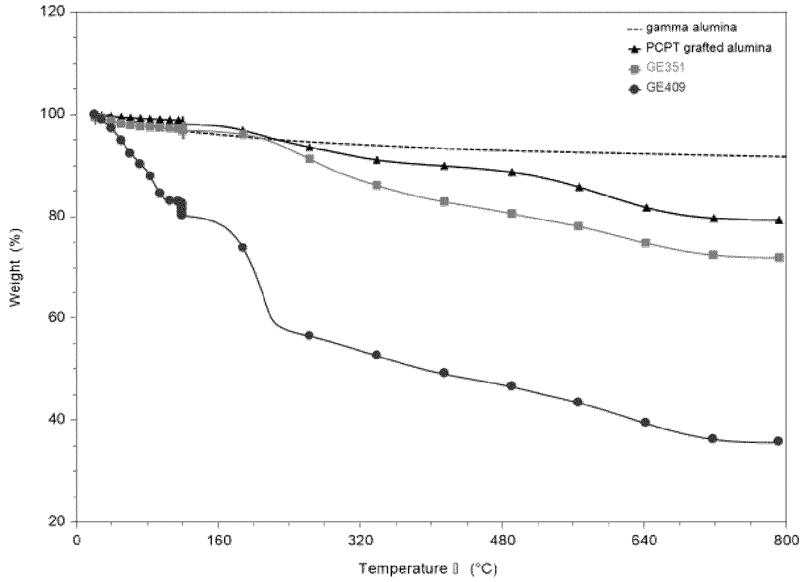
120
100
80
60
40
20
Weight (%)
0
160
320
480
640
800
Temperature (°C)
gamma alumina
PCPT grafted alumina
GE351
GE409

FIG. 12

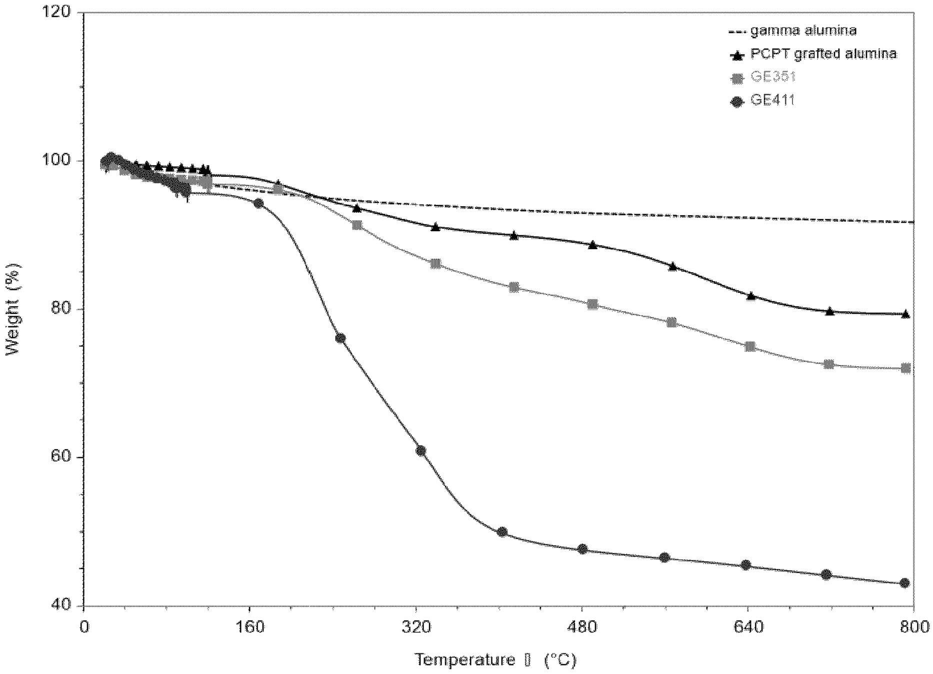
120
100
80
60
40
Weight (%)
0
160
320
480
640
800
Temperature (°C)
gamma alumina
PCPT grafted alumina
GE351
GE411

FIG. 13

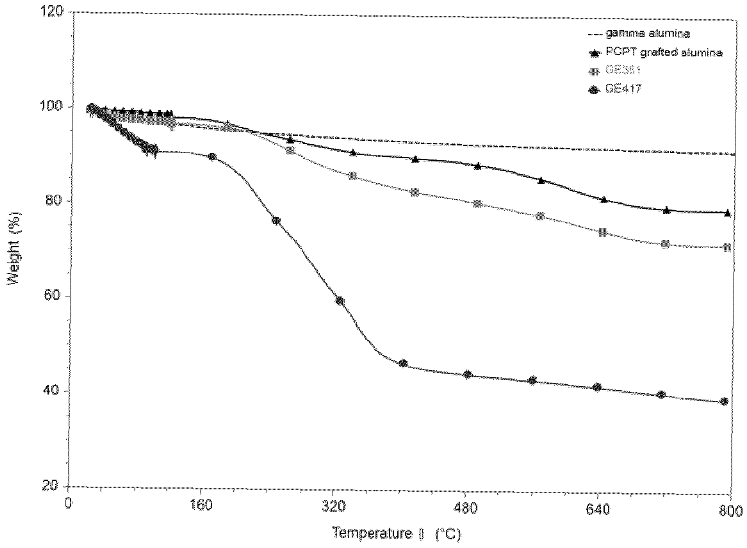
120
100
80
60
40
20
Weight (%)
0
160
320
480
640
800
Temperature (°C)
gamma alumina
PCPT grafted alumina
GE351
GE417

FIG. 14

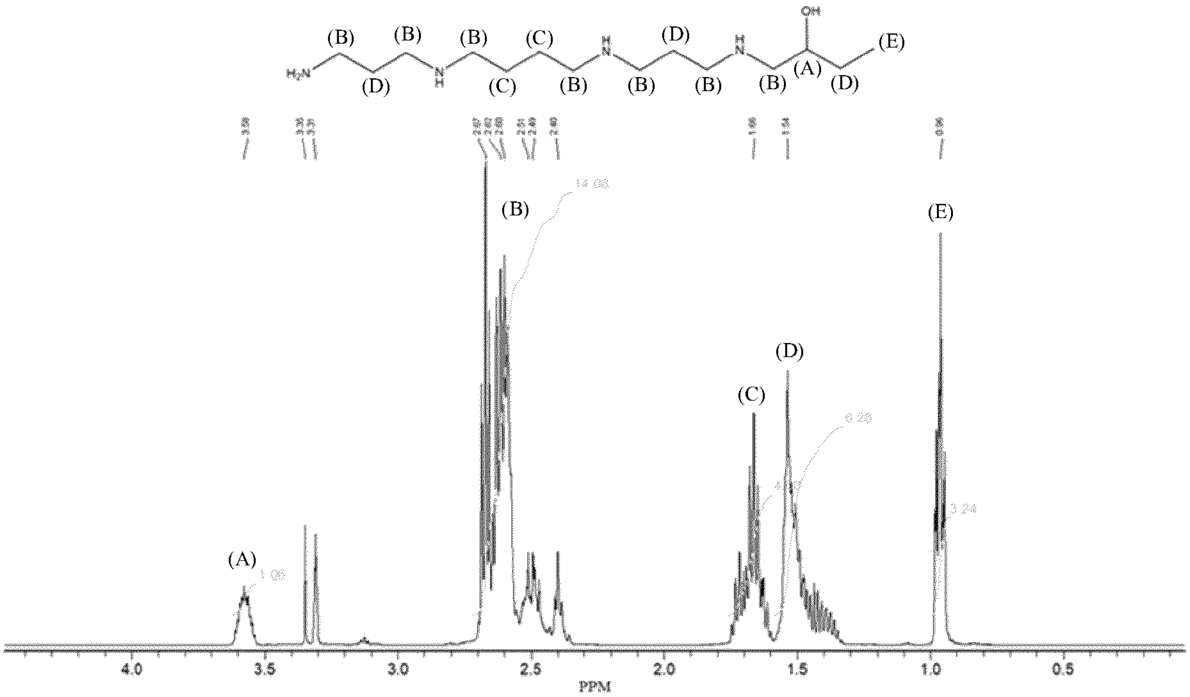
3.58
3.35
3.31
2.67
2.62
2.60
2.51
2.49
2.40
1.66
1.54
0.96
(A)
(B)
(C)
(D)
(E)
14.08
6.28
3.24
4.0
3.5
3.0
2.5
2.0
1.5
1.0
0.5
PPM

FIG. 15

Europäisches Patentamt
European Patent Office
Office européen des brevets

# EUROPEAN SEARCH REPORT

Application Number
EP 25 19 1121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/006521 A2 (X DEV LLC [US]) 4 January 2024 (2024-01-04) * example 2.1 * | 1-4,6, 8-13,15 | INV. B01J20/06 B01D53/02 B01J20/10 B01J20/20 B01J20/22 B01J20/32 |
| X | LAUGEL N ET AL: "NANOCOMPOSITE SILICA/POLYAMINE FILMS PREPARED BY A REACTIVE LAYER-BY-LAYER DEPOSITION", LANGMUIR, AMERICAN CHEMICAL SOCIETY, vol. 23, no. 7, 1 March 2007 (2007-03-01), pages 3706-3711, XP002442531, ISSN: 0743-7463, DOI: 10.1021/LA063052W * abstract * * section: "Spray Deposition of the Silica/Polyelectrolyte Nanocomposite Films"; page 3708 * | 1,5-7, 12-15 | |
| X | CN 107 159 124 A (UNIV GUILIN TECHNOLOGY) 15 September 2017 (2017-09-15) * examples 3-6 * | 1-4,6, 8-13,15 | |

| TECHNICAL FIELDS SEARCHED (IPC) |
|---|
| B01J |
| B01D |

The present search report has been drawn up for all claims

1

| Place of search | Date of completion of the search | Examiner |
|---|---|---|
| The Hague | 15 December 2025 | Klemps, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 19 1121

This annex lists the patent family members relating to the patent documents cited in the above-mentioned European search report. The members are as contained in the European Patent Office EDP file on
The European Patent Office is in no way liable for these particulars which are merely given for the purpose of information.

15-12-2025

| Patent document cited in search report | Publication date | Patent family member(s) | Publication date |
|---|---|---|---|
| WO 2024006521 A2 | 04-01-2024 | AU 2023298006 A1 | 09-01-2025 |
| | | CA 3259971 A1 | 04-01-2024 |
| | | EP 4547389 A2 | 07-05-2025 |
| | | JP 2025521644 A | 10-07-2025 |
| | | TW 202402388 A | 16-01-2024 |
| | | US 2025281905 A1 | 11-09-2025 |
| | | WO 2024006521 A2 | 04-01-2024 |
| CN 107159124 A | 15-09-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63680662
- US 2023082729 W
- US 2024051937 W
- US 606176

### Non-patent literature cited in the description

- *CHEMICAL ABSTRACTS*, 25085-99-8
- *CHEMICAL ABSTRACTS*, 112-57-2
- *CHEMICAL ABSTRACTS*, 9046-10-0